# EUROPÄISCHE PATENTSCHRIFT

(11) **EP 1 103 842 B1**
(45) Veröffentlichungstag und Bekanntmachung des Hinweises auf die Patenterteilung: **22.07.2009**
(21) Anmeldenummer: 00124242.9
(22) Anmeldetag: 10.11.2000
(51) Int. Cl.: G02F 1/15, C09K 9/02

(54) **Elektrochrome Vorrichtung**
Electrochromic device
Dispositif électrochromique

(30) Priorität: 23.11.1999 DE 19956228
(43) Veröffentlichungstag der Anmeldung: 30.05.2001
(73) Patentinhaber: Bayer Innovation GmbH, 40225 Düsseldorf (DE)
(72) Erfinder: Shelepin, Igor, Dr., 141700 Dolgoprudny (RU); Gavrilov, Vladimir, Dr., 141700 Dolgoprudny (RU); Berneth, Horst, Dr., 51373 Leverkusen (DE); Jacobsen, Wolfgang, Dr., 51069 Köln (DE); Neigl, Ralf, Dr., Yorktown Heights, NY 10598 (US)

(56) Entgegenhaltungen:
- WO-A-98/44384
- RU-C- 2 130 630

## Beschreibung

Die vorliegende Erfindung betrifft eine elektrochrome Vorrichtung mit verbessertem Schaltverhalten.

Elektrochrome Vorrichtungen sind bereits bekannt, beispielsweise aus D. Theis in Ullmann's Encyclopedia of Industrial Chemistry, Vol. A 8, S. 622, Verlag Chemie 1987 und WO-A 94/23333. Man unterscheidet zwei Grundtypen:
- Typ 1:: vollflächige elektrochrome Vorrichtungen.
- Typ 2:: elektrochrome Anzeigevorrichtungen mit strukturierten Elektroden.

Typ 1 findet beispielsweise bei elektrisch abdunkelbaren Fensterscheiben oder elektrisch abblendbaren Autospiegeln Anwendung. Solche Vorrichtungen sind beispielsweise aus US-A 4 902 108 bekannt.

Typ 2 findet bei Segment- und Matrixanzeigen Verwendung. Solche Anzeigevorrichtungen sind beispielsweise in DE-A 196 31 728 vorgeschlagen worden. Derartige Vorrichtungen können transmissiv oder bei Verspiegelung reflektiv betrachtet werden.

In WO-A 94/23333 werden elektrochrome Materialien verschiedener Bauweise gegenübergestellt, die aber nicht als Anzeigevorrichtungen verwendet werden:
- Bauweise a:: Die elektrochromen Substanzen liegen als Film oder Schicht fest auf den Elektroden (vgl. Ullmann, s.o.).
- Bauweise b:: Die elektrochromen Substanzen werden beim Redoxprozeß auf den Elektroden als Schicht abgeschieden (vgl. Ullmann, s.o.).
- Bauweise c:: Die elektrochromen Substanzen bleiben permanent in Lösung.

Für Bauweise a) ist als elektrochromes Material das Paar Wolframoxid/Palladiumhydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten des Stromes bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya 13, 32-37 (1977), US-A 4 902 108 und US-A 5 140 455 ist ein elektrochromes System dieser letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemisch reversibel reduzierbare und eine reversibel oxidierbare Substanz verwendet. Beide sind im Grundzustand farblos oder nur schwach gefärbt. Unter Einfluß einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

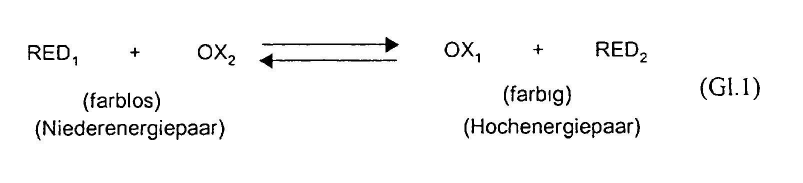

Aus US-A 4 902 108 ist bekannt, daß solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Für solche elektrochromen Zellen der Bauweise c sind verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z.B. US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden DE-A 196 31 728).

D₁ =RU 2130630 offenbart eine elektrochrome Vorrichtung gemäß dem Oberbegriff des Anspruchs 1.

Die elektrochromen Zellen bestehen normalerweise aus einem Paar Glasplatten, von denen im Falle des Autospiegels eine verspiegelt ist. Eine Seite dieser Scheiben ist mit einer lichtdurchlässigen, elektrisch leitfähigen Schicht, beispielsweise Indium-Zinn-Oxid (ITO), flächig beschichtet, wobei im Falle der Anzeigevorrichtungen diese leitfähige Beschichtung in elektrisch voneinander getrennte Segmente aufgeteilt ist, die einzeln kontaktiert sind. Aus diesen Scheiben wird nun eine Zelle aufgebaut, indem sie mit ihrer einander zugewandten elektrisch leitfähig beschichteten Seite über einen Dichtungsring zu einer Zelle verbunden werden. In diese Zelle wird nun über eine Öffnung eine elektrochrome Flüssigkeit eingefüllt und die Zelle dicht verschlossen. Über die ITO-Schichten werden die beiden Scheiben mit einer Spannungsquelle verbunden.

Elektrochrome Vorrichtungen der Bauweise c, wie sie oben näher beschrieben wurden, sind selbstlöschend, d.h. wenn die Spannung abgeschaltet wird, verschwindet die Färbung der Vorrichtung von alleine. Dies kann z.B. durch Kurzschließen der Pole der Vorrichtung oder durch kurzzeitiges Anlegen einer Spannung entgegengesetzer Polarität beschleunigt werden. Im Sinne der oben angeführten Gleichung bilden sich dann durch Elektronenübertragung aus den farbigen Molekülen OX₁ und RED₂ die nichtfarbigen Moleküle RED₁ und OX₂ zurück.

Diese Selbstlöschung kann aber besonders bei Anzeigevorrichtungen, bei denen bei wenigstens einer der beiden Platten oder Folien die elektrisch leitfähige Beschichtung in einzeln kontaktierte Segmente aufgeteilt ist, stark verlangsamt sein, insbesondere dann, wenn einzelne Segmente längere Zeit an Spannung anlagen.

Es wurde nun überraschenderweise gefunden, daß die Selbstlöschung einer elektrochromen Vorrichtung, insbesondere einer elektrochromen Anzeigevorrichtung erheblich beschleunigt werden kann, wenn das elektrochrome Medium zusätzlich zu den elektrochromen Substanzen OX₂ und RED₁ noch eine weitere reduzierbare oder oxidierbare elektrochrome Verbindung OX₃ bzw. RED₃ enthält, deren Reduktions- bzw. Oxidationspotential vom Betrag her nicht größer ist als das Reduktionspotential von OX₂ bzw. das Oxidationspotential von RED₁.

Als weiterer Vorteil einer solchen elektrochromen Vorrichtung, die neben OX₂ und RED₁ noch ein OX₃ bzw. RED₃ enthält, wurde gefunden, daß die Kantenschärfe der geschalteten Segmente einer elektrochromen Anzeigevorrichtung deutlich erhöht ist.

Gegenstand der Erfindung ist demnach eine elektrochrome Vorrichtung gemäß Anspruch 1.

Der Auswahl von OX₃ bzw. RED₃ sind prinzipiell keine weiteren Grenzen gesetzt außer, daß die elektrochemische Umwandlung

OX₃ ⇄ RED₃ (G1.2)

reversibel erfolgt und von keinen chemischen oder elektrochemischen Folgeschritten, insbesondere solchen irreversibler Natur, begleitet wird. Insbesondere dürfen auch die Redoxreaktionen zwischen OX₃ und RED₁ oder RED₂ bzw. zwischen RED₃ und OX₂ oder OX₁ keine irreversiblen Anteile aufweisen.

In einen bevorzugten Form der erfindungsgemäßen elektrochromen Vorrichtung wird als OX₃ das zu RED₁ korrespondierende OX₁ eingesetzt.

In einer anderen bevorzugten Form der erfindungsgemäßen elektrochromen Vorrichtung wird als RED₃ das zu OX₂ korrespondierende RED₂ eingesetzt.

Ebenfalls bevorzugt sind solche erfindungsgemäßen elektrochromen Vorrichtungen, in denen OX₃ bzw. RED₃ im sichtbaren Teil des elektromagnetischen Spektrums möglichst nicht oder nur schwach absorbieren.

Im Sinne der Erfindung bevorzugt sind solche elektrochromen Vorrichtungen mit verbessertem Schaltverhalten, in denen
a) die reduzierbare Substanz mindestens eine, vorzugsweise wenigstens zwei chemisch reversible Reduktionswellen im cyclischen Voltammogramm und die oxidierbare Substanz entsprechend mindestens eine, vorzugsweise wenigstens zwei chemisch reversible Oxidationswellen besitzen, oder
b) die reduzierbare Substanz und die oxidierbare Substanz über eine Brücke B kovalent aneinander gebunden sind, oder
c) als reduzierbare und/oder oxidierbare Substanz solche ausgewählt sind, bei denen der reversible Übergang zwischen der oxidierbaren Form und der reduzierbaren Form oder umgekehrt mit dem Bruch bzw. dem Aufbau einer σ-Bindung verbunden ist, oder
d) die reduzierbare Substanz und/oder die oxidierbare Substanz Metallsalze oder Metallkomplexe sind von solchen Metallen, die in mindestens zwei Oxidationsstufen existieren, oder
e) die reduzierbare und/oder oxidierbare Substanz Oligo- und Polymere sind, die mindestens eines der genannten Redoxsysteme, aber auch Paare solcher Redoxsysteme, wie sie unter a) bis d) definiert sind, enthalten, oder
f) als reduzierbare und/oder oxidierbare Substanz Mischungen der in a) bis e) beschriebenen Substanzen eingesetzt werden, vorausgesetzt diese Mischungen enthalten mindestens ein reduzierbares und mindestens ein oxidierbares Redoxsystem.

Mit reduzierbare Substanz sind OX₂ und OX₃, mit oxidierbare Substanz RED₁ und RED₃ gemeint.

Die erfindungsgemäße elektrochrome Vorrichtung enthält OX₂ und RED₁ in dem elektrochromen Medium in ähnlichen oder gleichen Konzentrationen, d. h. die Konzentrationen unterscheiden sich in der Regel nicht um mehr als den Faktor 3, insbesondere 2, ganz besonders 1.1. Die Konzentration von OX₃ bzw. RED₃ in dem elektrochromen Medium beträgt dagegen 20-30%.

Durch Auswahl der elektrochromen Verbindungen RED₁, OX₂ und OX₃ bzw. RED₃ und/oder Mischungen davon lassen sich beliebige monochrome Farbtöne einstellen. Für eine polychrome Farbdarstellung können zwei oder mehrere solcher elektrochromer Vorrichtungen flächig aufeinander gelegt werden, wobei jede dieser Vorrichtungen einen anderen Farbton erzeugen kann. Vorzugsweise wird ein solcher Stapel so aufgebaut, daß die sich berührenden Vorrichtungen eine lichtdurchlässige Platte gemeinsam haben, die dann auch auf beiden Seiten leitfähig beschichtet ist und je nach Ausführung in Segmente unterteilt ist. Beispielsweise besteht dann ein Stapel aus drei elektrochromen Vorrichtungen aus mindestens vier Platten. Durch Einschalten von Segmenten in verschiedenen dieser gestapelten Vorrichtungen lassen sich mehrfarbige Anzeigen realisieren. Werden hintereinander liegende Segmente verschiedener solcher Vorrichtungen eingeschaltet, erhält man eine subtraktive Farbmischung. So lassen sich im Rahmen einer Trichromic beliebige Farben darstellen, also beispielsweise bunte Bilder.

Im Sinne der Erfindung geeignete OX₂ und RED₁ sind solche Substanzen, die bei ihrer Reduktion bzw. Oxidation an der Kathode bzw. Anode in dem genannten Lösungsmittel Produkte RED₂ und OX₁ liefern, die keine chemische Folgereaktion eingehen, sondern komplett wieder zu OX₂ und RED₁ oxidiert bzw. reduziert werden können.

Durch Auswahl der elektrochromen Verbindungen RED₁ und OX₂ und/oder Mischungen davon lassen sich beliebige monochrome Farbtöne einstellen. Die bevorzugten Grautöne lassen sich in bekannter Weise durch geeignete Mischung von Trichromiefarben einstellen (Colour Physics for Industry, Roderick McDonald, ed., Society of Dyers and Colourists, 1987, chapter 3 and 5). Hierzu sei auch auf WO-A 98/44384 verwiesen.

Geeignete reduzierbare Substanzen OX₂ sind beispielsweise 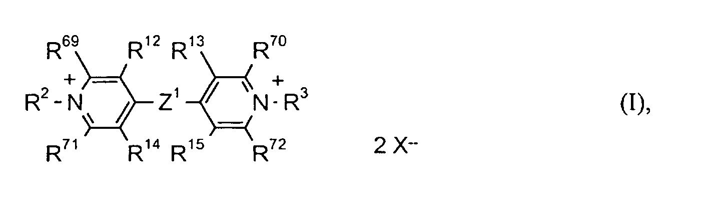 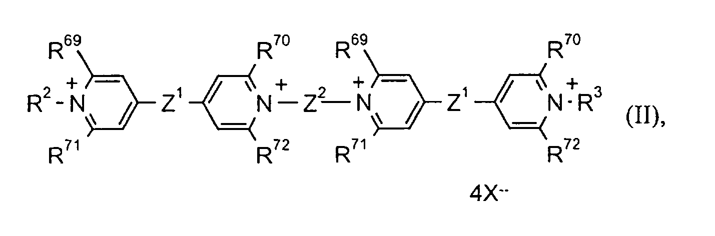 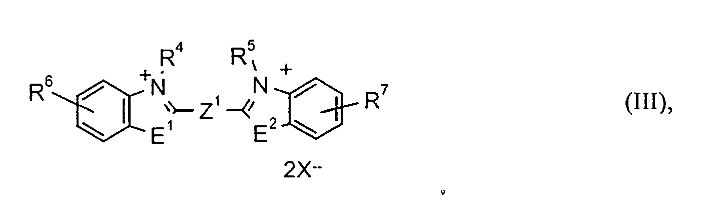 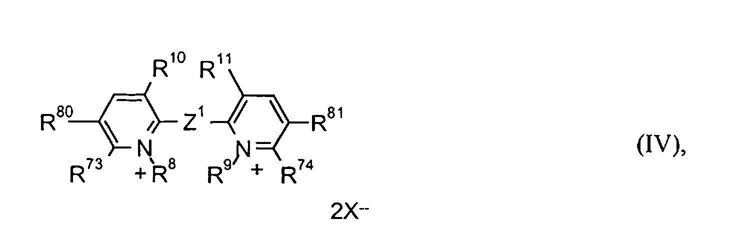 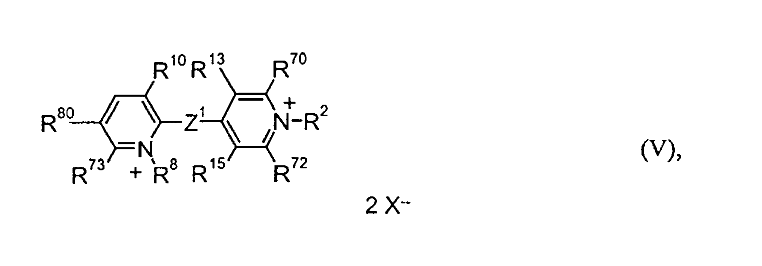 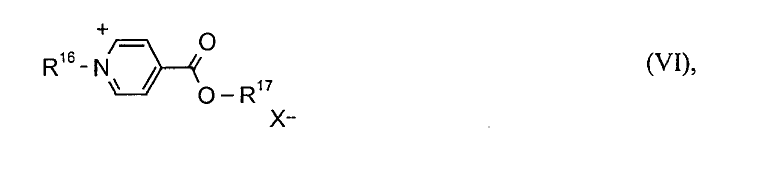 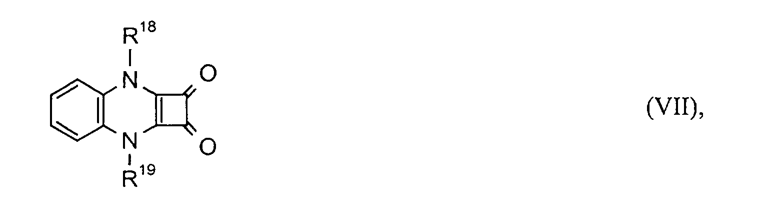 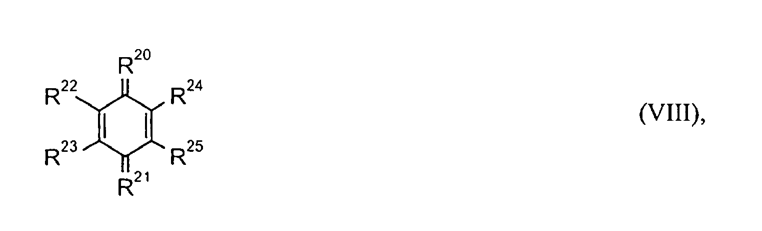 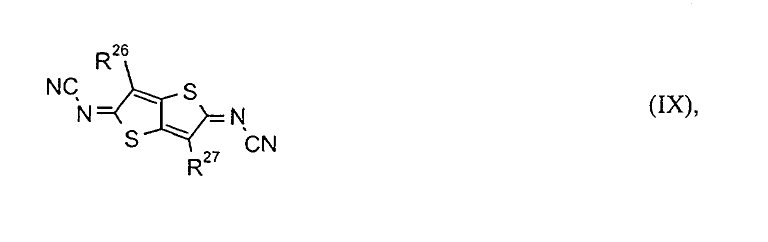 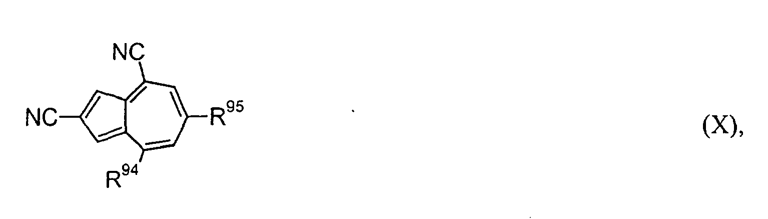 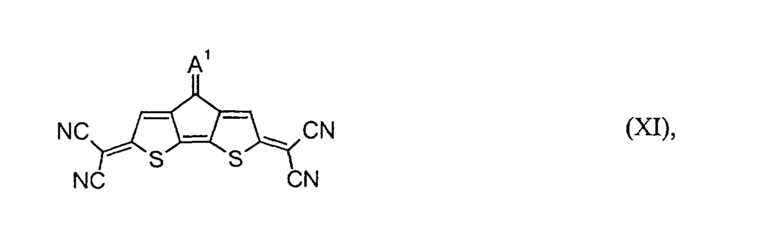 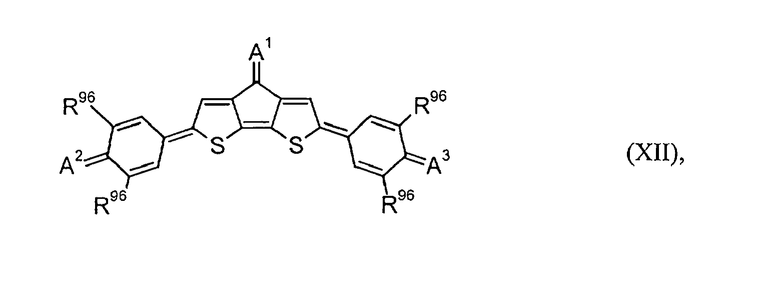 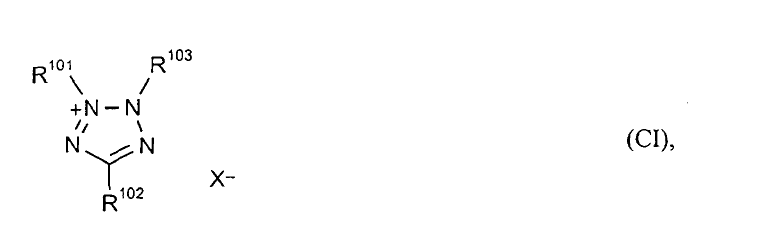 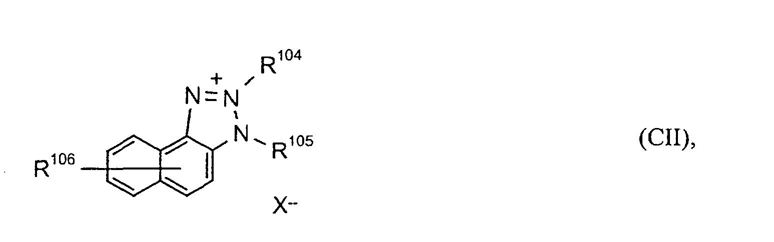 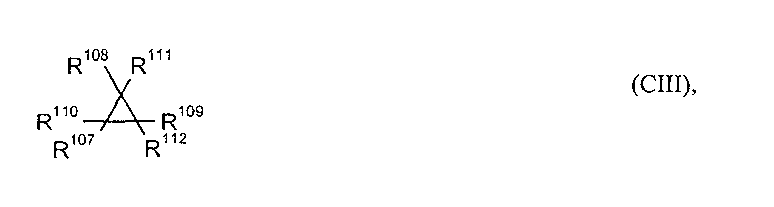 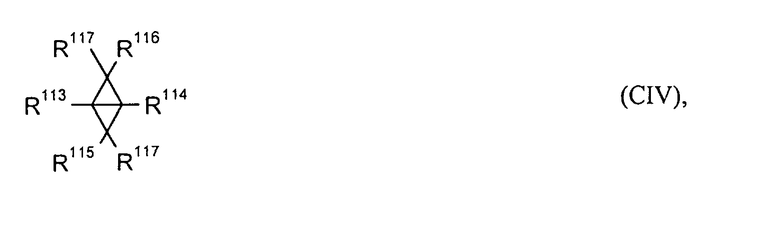 worin
R² bis R⁵, R⁸, R⁹, R¹⁶ bis R¹⁹ unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten oder
R⁴; R⁵ bzw. R⁸; R⁹ gemeinsam eine -(CH₂)₂- oder -(CH₂)₃-Brücke bilden können,
R⁶, R⁷ und R²² bis R²⁵ unabhängig voneinander Wasserstoff, C₁- bis C₄-Alkyl, C₁- bis C₄-Alkoxy, Halogen, Cyan, Nitro oder C₁- bis C₄-Alkoxycarbonyl bedeuten oder
R²²; R²³ und/oder R²⁴; R²⁵ eine -CH=CH-CH=CH-Brücke bilden können,
R¹⁰; R¹¹, R¹⁰; R¹³, R¹²; R¹³ und R¹⁴; R¹⁵ unabhängig voneinander Wasserstoff oder paarweise eine -(CH₂)₂-, -(CH₂)₃- oder -CH=CH-Brücke bedeuten,
R²⁰ und R²¹ unabhängig voneinander O, N-CN, C(CN)₂ oder N-C₆- bis C₁₀-Aryl bedeuten,
R²⁶ und R²⁷ Wasserstoff, C₁- bis C₄-Alkyl, C₁- bis C₄-Alkoxy, Halogen, Cyan, Nitro, C₁- bis C₄-Alkoxycarbonyl oder C₆- bis C₁₀-Aryl bedeuten,
R⁶⁹ bis R⁷⁴, R⁸⁰, und R⁸¹ unabhängig voneinander Wasserstoff oder C₁- bis C₆-Alkyl bedeuten und
R⁶⁹ bis R⁷⁴ unabhängig voneinander zusätzlich Aryl bedeuten oder
R⁶⁹; R¹², R⁷⁰; R¹³, R⁷³; R⁸⁰ und/oder R⁷⁴; R⁸¹ gemeinsam eine -CH=CH-CH=CH-Brücke bilden,
E¹ und E² unabhängig voneinander O, S, NR¹ oder C(CH₃)₂ bedeuten oder
E¹ und E² gemeinsam eine -N-(CH₂)₂-N-Brücke bilden,
R¹ C₁- bis C₁₈-Alkyl, C₂- bis C₁₂-Alkenyl, C₄- bis C₇-Cycloalkyl, C₇- bis C₁₅-Aralkyl, C₆- bis C₁₀-Aryl bedeutet,
Z¹ eine direkte Bindung, -CH=CH-, -C(CH₃)=CH-, -C(CN)=CH-, -CCl=CCl-, -C(OH)=CH-, -CCl=CH-, -C≡C-, -CH=N-N=CH-, -C(CH₃)=N-N=C(CH₃)-, -CCI=N-N=CCI- oder -C₆H₄- bedeutet,
Z² -(CH₂)ᵣ- oder -CH₂-C₆H₄-CH₂- bedeutet,
r eine ganze Zahl von 1 bis 10 bedeutet,
R⁹⁴ und R⁹⁵ unabhängig voneinander Wasserstoff oder Cyano bedeuten,
R¹⁰¹ bis R¹⁰⁵ unabhängig voneinander C₆- bis C₁₀-Aryl oder einen ggf. benzanellierten aromatischen oder quasiaromatischen fünf- oder sechsgliedrigen heterocyclischen Ring bedeuten,
R¹⁰⁷, R¹⁰⁹, R¹¹³ und R¹¹⁴ unabhängig voneinander einen Rest der Formeln (CV) bis (CVII) 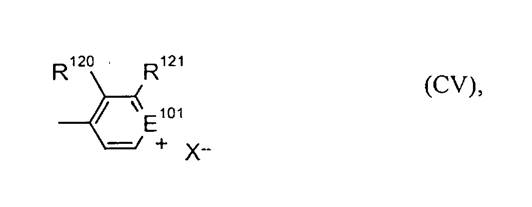 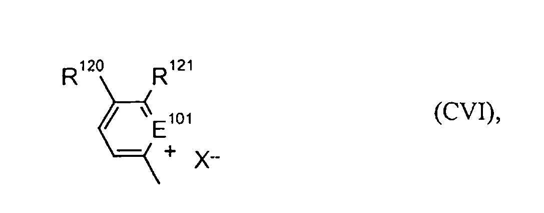 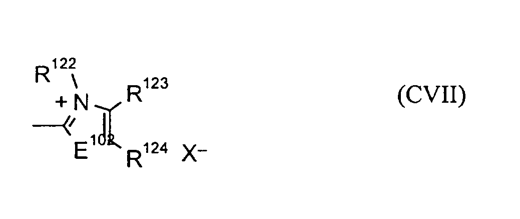 bedeuten,
R¹⁰⁸, R¹¹⁵ und R¹¹⁶ unabhängig voneinander C₆- bis C₁₀-Aryl oder einen Rest der Formel (CV) bedeuten,
R¹¹⁰ bis R¹¹², R¹¹⁷ und R¹¹⁸ unabhängig voneinander Wasserstoff, C₁- bis C₄-Alkyl, Halogen oder Cyano bedeuten,
E¹⁰¹ und E¹⁰² unabhängig voneinander O, S oder N-R¹¹⁹ bedeuten,
R¹¹⁹ und R¹²² unabhängig voneinander C₁- bis C₁₈-Alkyl, C₂- bis C₈-Alkenyl, C₄- bis C₇-Cycloalkyl, C₇- bis C₁₅-Aralkyl oder C₆- bis C₁₀-Aryl bedeuten,
R¹⁰⁶, R¹²⁰, R¹²¹, R¹²³ und R¹²⁴ unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
R¹²⁰, R¹²¹ bzw. R¹²³, R¹²⁴ gemeinsam eine -CH=CH-CH=CH-Brücke bilden,
A¹, A² und A³ unabhängig voneinander O oder C(CN)₂ bedeuten,
R⁹⁶, Wasserstoff, Phenyl oder tert.-Butyl bedeutet und
X⁻ ein unter den Bedingungen redox-inertes Anion bedeutet.

Geeignete oxidierbare Substanzen RED₁ sind beispielsweise 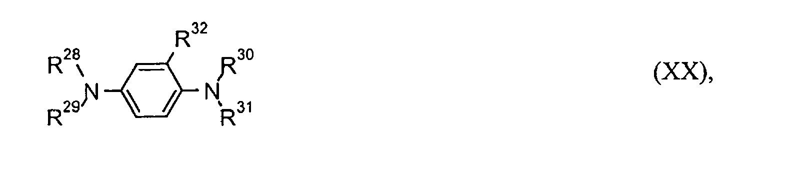 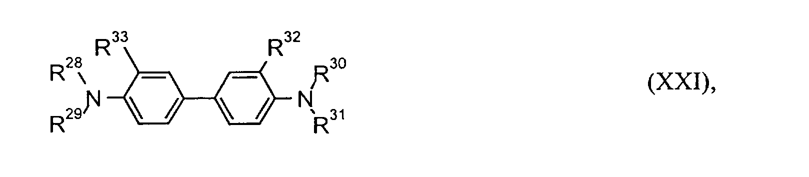 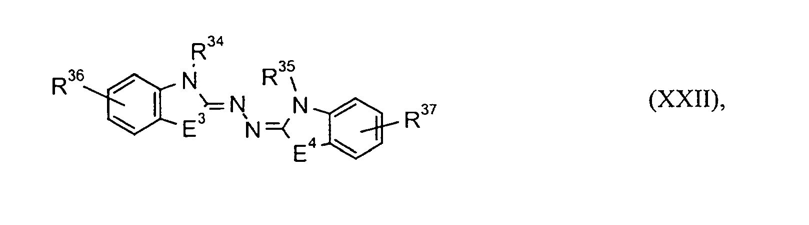 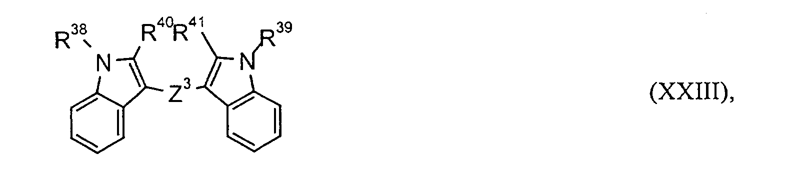 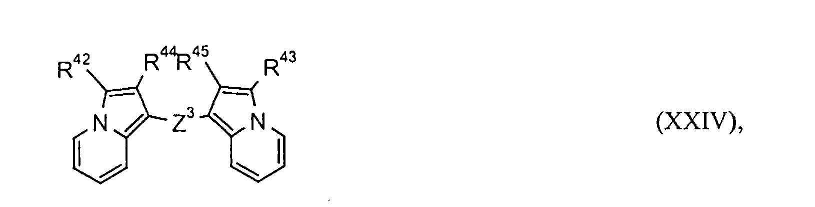 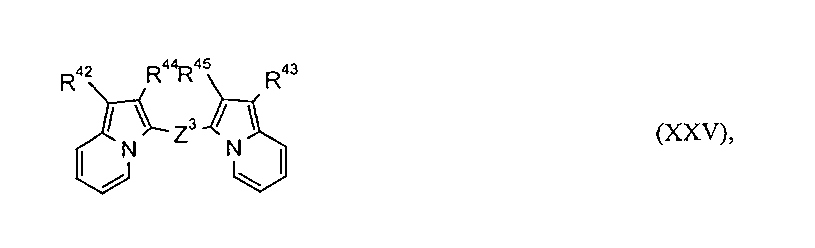 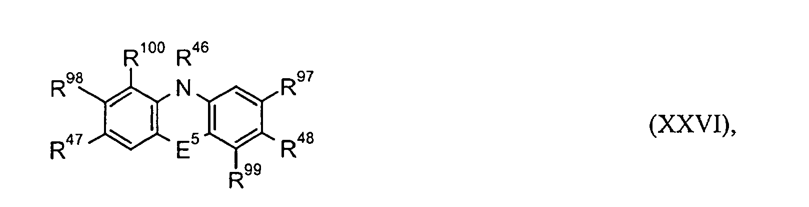 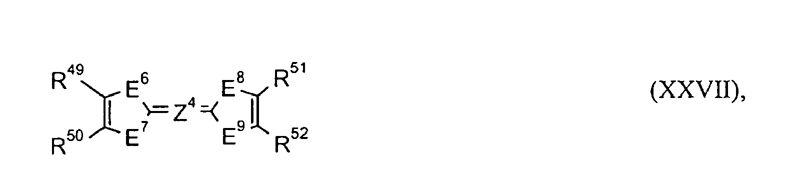 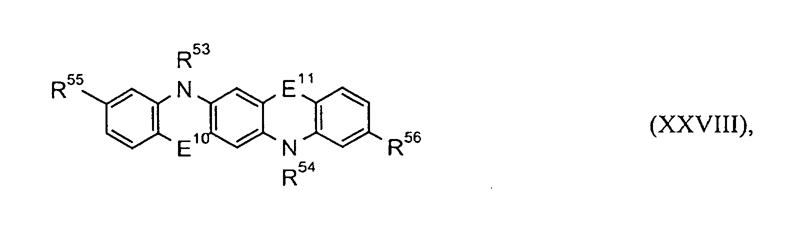 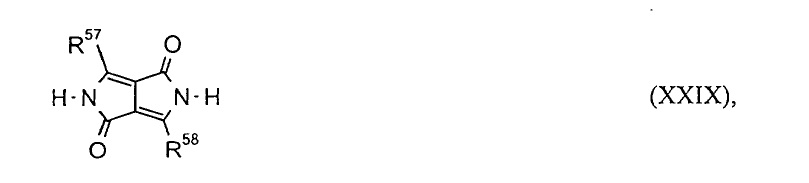 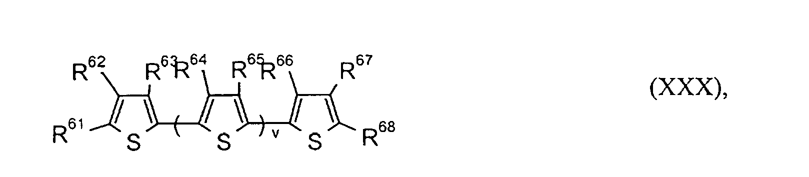 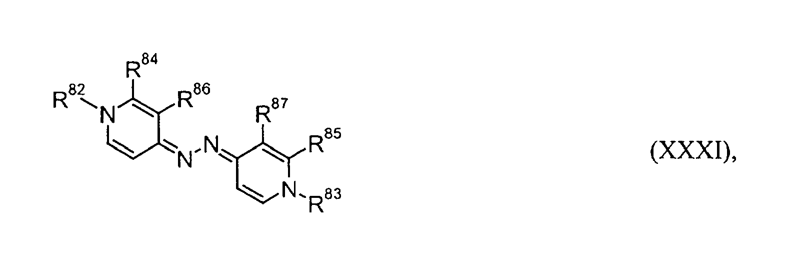 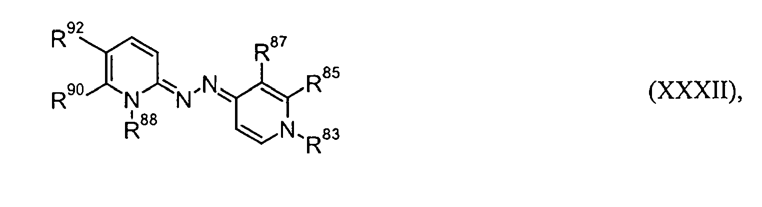 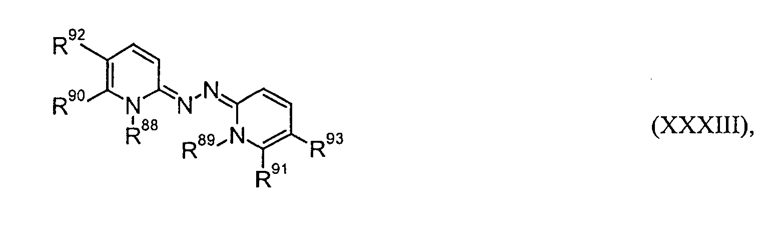 worin
R²⁸ bis R³¹, R³⁴, R³⁵, R³⁸, R³⁹, R⁴⁶, R⁵³ und R⁵⁴ unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
R³², R³³, R³⁶, R³⁷, R⁴⁰, R⁴¹, R⁴² bis R⁴⁵, R⁴⁷, R⁴⁸, R⁴⁹ bis R⁵², R⁵⁵ bis R⁵⁸ und R⁹⁷ bis R¹⁰⁰ unabhängig voneinander Wasserstoff, C₁- bis C₄-Alkyl, C₁- bis C₄-Alkoxy, Halogen, Cyan, Nitro, C₁- bis C₄-Alkoxycarbonyl, C₆- bis C₁₀-Aryl oder C₆- bis C₁₀-Aryloxy bedeuten
   und
R⁵⁷ und R⁵⁸ zusätzlich einen aromatischen oder quasiaromatischen fünf- oder sechsgliedrigen heterocyclischen Ring, der gegebenenfalls benzanneliert ist, bedeuten und R⁴⁸ zusätzlich NR⁷⁵R⁷⁶ bedeutet oder
R⁴⁹; R⁵⁰, R⁵¹; R⁵² und/oder R⁴⁸; R⁹⁷ oder R⁴⁸; R⁹⁹, R⁹⁷; R⁹⁸ oder R⁹⁸; R¹⁰⁰ unabhängig voneinander eine -(CH₂)₃-, -(CH₂)₄-, -(CH₂)₅- oder -CH=CH-CH=CH-Brücke bilden,
Z³ eine direkte Bindung, eine -CH=CH- oder -N=N-Brücke bedeutet,
=Z⁴= eine direkte Doppelbindung, eine =CH-CH= oder =N-N=-Brücke bedeutet,
E³ bis E⁵, E¹⁰ und E¹¹ unabhängig voneinander O, S, NR⁵⁹ oder C(CH₃)₂ bedeuten und
E⁵ zusätzlich C=O oder SO₂ bedeutet,
E³ und E⁴ unabhängig voneinander zusätzlich -CH=CH- bedeuten können,
E⁶ bis E⁹ unabhängig voneinander S, Se oder NR⁵⁹ bedeuten,
R⁵⁹, R⁷⁵ und R⁷⁶ unabhängig voneinander C₁- bis C₁₂-Alkyl, C₂- bis C₈-Alkenyl, C₄- bis C₇-Cycloalkyl, C₇- bis C₁₅-Aralkyl, C₆- bis C₁₀-Aryl bedeuten,
   und
R⁷⁵ zusätzlich Wasserstoff bedeutet oder R⁷⁵ und R⁷⁶ in der Bedeutung von NR⁷⁵R⁷⁶ gemeinsam mit dem N-Atom, an das sie gebunden sind, einen fünf-oder sechsgliedrigen Ring bedeuten, der gegebenenfalls weitere Heteroatome enthält,
R⁶¹ bis R⁶⁸ unabhängig voneinander Wasserstoff, C₁- bis C₆-Alkyl, C₁- bis C₄-Alkoxy, Cyan, C₁- bis C₄-Alkoxycarbonyl oder C₆- bis C₁₀-Aryl bedeuten und
R⁶¹; R⁶² und R⁶⁷; R⁶⁸ unabhängig voneinander zusätzlich eine -(CH₂)₃-, -(CH₂)₄- oder -CH=CH-CH=CH-Brücke bilden oder
R⁶²; R⁶³, R⁶⁴; R⁶⁵ und R⁶⁶; R⁶⁷ eine -O-CH₂CH₂-O- oder -O-CH₂CH₂CH₂-O-Brücke bilden,
v eine ganze Zahl zwischen 0 und 100 bedeutet,
R⁸², R⁸³, R⁸⁸ und R⁸⁹ unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
R⁸⁴ bis R⁸⁷ und R⁹⁰ bis R⁹³ unabhängig voneinander Wasserstoff oder C₁- bis C₆-Alkyl bedeuten oder
R⁸⁴; R⁸⁶, R⁸⁵; R⁸⁷, R⁹⁰; R⁹² und/oder R⁹¹; R⁹³ gemeinsam eine -CH=CH-CH=CH-Brücke bilden.

Ebenfalls geeignet als RED₁ sind Anionen wie z.B. I⁻, I₃⁻ , Br⁻, SCN⁻.

Über eine Brücke B verknüpfte, gegebenenfalls oligo- oder polymere Redoxsysteme sind beispielsweise solche der Formel

Y-[-(-B-Z-)ₐ-(-B-Y-)_{b}-]_{c}-B-Z (L),

worin
Y und Z unabhängig voneinander für einen Rest OX₂ oder RED₁ stehen,
wobei
- OX₂: für den Rest eines reversibel elektrochemisch reduzierbaren Redoxsystems steht, und
- RED₁: für den Rest eines reversibel elektrochemisch oxidierbaren Redoxsystems steht,
- B: für ein Brückenglied steht,
- c: für eine ganze Zahl von 0 bis 1 000 steht, und
- a und b: unabhängig voneinander für eine ganze Zahl von 0 bis 100 stehen.
Vorzugsweise ist (a+b)·c ≤ 10 000.

Hierbei ist unter reversibel elektrochemisch reduzierbar oder oxidierbar gemeint, daß die Elektronenübertragung ohne oder auch mit Änderung des σ-Gerüsts erfolgen kann ganz im Sinne der oben genannten Definition der erfindungsgemäßen OX₂ und RED₁.

Insbesondere sind mit den elektrochromen Verbindungen der Formel (L) solche oligomeren Verbindungen der Formeln

OX₂-B-RED₁ (La),

OX₂-B-RED₁-B-OX₂ (Lb),

RED₁-B-OX₂-B-RED₁ (Lc),

OX₂-(B-RED₁-B-OX₂)_{d}-B-RED₁ (Ld),

OX₂-(B-OX₂)_{c}-B-OX₂ (Le)

oder

RED₁-(B-RED₁)ₑ-B-RED₁ (Lf)

gemeint,
worin
OX₂, RED₁ und B die oben angegebene Bedeutung haben,
d für eine ganze Zahl von 1 bis 5 steht und
e für eine ganze Zahl von 0 bis 5 steht,
wobei OX₂, RED₁ und/oder B, insbesondere wenn d und/oder e >1 sind, in jeder wiederkehrenden Einheit verschiedene Bedeutung haben können.

Insbesondere sind mit den elektrochromen Verbindungen der Formel (L) solche polymeren Verbindungen der Formeln

OX₂-(B-RED₁-B-OX₂)_{d}-B-RED₁ (Ld),

OX₂-(B-OX₂)ₑ-B-OX₂ (Le),

RED₁-(B-RED₁)ₑ-B-RED₁ (Lf),

gemeint,
worin
OX₂, RED₁ und B die oben angegebene Bedeutung haben,
d für eine ganze Zahl von 5 bis 100 000, vorzugsweise 10 bis 10 000 steht und
e für eine ganze Zahl von 5 bis 100 000, vorzugsweise 10 bis 10 000 steht,
wobei OX₂, RED₁ und/oder B, insbesondere wenn d und/oder e >1 sind, in jeder wiederkehrenden Einheit verschiedene Bedeutung haben können.

Oligo- oder polymere elektrochrome Verbindungen, die nicht der Formel (L) entsprechen, sind insbesondere Seitenkettenpolymere der Formeln

...-(D)_{f}-...-(E-B¹-Y)_{g}-...-(F-B²-Z)ₕ-... (CL)

und

...-(D)_{f}-...-[E-(B¹-Y)ᵢ-(B²-Z)ⱼ]_{g}-...-(F-B²-Z)ₕ-... (CLX),

worin
D, E und F Bausteine einer Oligomer- oder Polymerkette darstellen, wobei die Einheiten D, E und F sowohl statistisch verteilt als auch in Blöcken angeordnet sein können,
B¹ und B² für ein Brückenglied stehen,
Y und Z unabhängig voneinander für einen Rest OX₂ oder RED₁ stehen,
wobei
OX₂ für den Rest eines reversibel elektrochemisch reduzierbaren Redoxsystems steht, und
RED₁ für den Rest eines reversibel elektrochemisch oxidierbaren Redoxsystems steht,
f, g und h unabhängig voneinander für eine ganze Zahl von 1 bis 100 000, insbesondere 1 bis 10 000 stehen,
wobei
f+g+h >2,
f und h unabhängig voneinander auch für 0 stehen können und
i und j unabhängig voneinander für eine ganze Zahl von 1 bis 100, insbesondere 1 bis 10, ganz besonders 1 oder 2 stehen.

Insbesondere sind mit Oligomeren oder Polymeren der Formel (CL) solche der Formeln

...-(D)_{f}-...-(E-B¹-OX₂)_{g}-...-(F-B²-RED₁)ₕ-... (CLa),

...-(D)_{f}-...-(E-B¹-OX₂)_{g}- (CLb),

...-(D)_{f}-...-(F-B²-RED₁)ₕ-... (CLc),

...-(D)_{f}-...-[E-B¹-OX₂-B²-RED₁]_{g}-... (CLXa)

oder

...-(D)_{f}-...-[F-B²-RED₁-B¹-OX₂]ₕ-... (CLXb)

gemeint,
worin
f für eine ganze Zahl von 0 bis 10 000 steht,
g und h unabhängig voneinander für eine ganze Zahl von 1 bis 10 000, vorzugsweise 1 bis 1000, besonders bevorzugt 1 bis 100 stehen und
die anderen Reste die oben angegebene Bedeutung besitzen,
wobei OX₂ und/oder RED₁, insbesondere wenn g und/oder h >1 sind, in jeder wiederkehrenden Einheit verschiedene Bedeutung besitzen können.

Bevorzugt ist f >10·(g+h), besonders bevorzugt ist f >100·(g+h).

Mit OX₂ und RED₁ in den Formeln (L) und (La) bis (Lf) sowie (CL) und (CLa) bis (CLc) sowie (CLX) und (CLXa) bis (CLXb) sind insbesondere Reste der oben beschriebenen Redoxsysteme der Formeln (I) bis (X), (CI) bis CIV) und (XX) bis (XXXIII) gemeint, wobei die Bindung zum Brückenglied B, B¹ oder B² über einen der Reste R² bis R¹⁹, R²² bis R²⁷, R²⁸ bis R⁵⁸ R⁶¹ R⁶², R⁶⁷, R⁶⁸, R⁸³, R⁸⁸, R¹²² oder im Falle, daß einer der Reste E¹ oder E² für NR¹ oder einer der Reste E³ bis E¹¹ für NR⁵⁹ oder einer der Reste E¹⁰¹ bis E¹⁰² für NR¹¹⁹ steht, über R¹, R⁵⁹ bzw. R¹¹⁹ erfolgt und die genannten Reste dann für eine direkte Bindung stehen, und
B, B¹ oder B² unabhängig voneinander für eine Brücke der Formeln -(CH₂)ₙ- oder -Y¹ₛ-[(CH₂)ₘ-Y²]ₒ-(CH₂)ₚ-Y³_{q}- stehen, die durch C₁- bis C₄-Alkyl, C₁- bis C₄-Alkoxy, Halogen oder Phenyl substituiert sein kann,
Y¹ bis Y³ unabhängig voneinander für O, S, NR⁶⁰, COO, CONH, NHCONH, Cyclopentandiyl, Cyclohexandiyl, Phenylen oder Naphthylen stehen,
R⁶⁰ C₁- bis C₆-Alkyl, C₂- bis C₆-Alkenyl, C₄- bis C₇-Cycloalkyl, C₇- bis C₁₅-Aralkyl oder C₆- bis C₁₀-Aryl bedeutet,
n eine ganze Zahl von 1 bis 12 bedeutet,
m und p unabhängig voneinander eine ganze Zahl von 0 bis 8 bedeuten,
o eine ganze Zahl von 0 bis 6 bedeutet und
q und s unabhängig voneinander 0 oder 1 bedeuten,
wobei für o >1 Y² und m in jeder wiederkehrenden Einheit verschieden sein können.

Ebenfalls mit OX₂ oder RED₁ in den genannten Formeln (L) und (La) bis (Lf) sowie (CL) und (CLa) bis (CLc) sowie (CLX) und (CLXa) bis (CLXb) sind Metallkomplexe gemeint, sofern sie über eine kovalente Bindung mit den Brückengliedern B, B¹ oder B² verbunden sein können. Als Beispiel sei Ferrocen genannt.

In ganz besonderem Maße sind mit OX₂ und RED₁ in den Formeln (L) und (La) bis (Lf) sowie (CL) und (CLa) bis (CLc) und (CLX) und (CLXa) bis (CLXb) Reste der oben beschriebenen Redoxsysteme der Formeln (I), (V), (XX), (XXII), (XXIII), (XXV), (XXVI) und (XXXIII) sowie für RED₁ Ferrocen gemeint.

Mit D, E und F in den Formeln (CL) und (CLa) bis (CLc) sowie (CLX) und (CLXa) bis (CLXb) sind solche Einheiten gemeint, die zum Aufbau von Oligo- oder Polyacrylaten, -methacrylaten, -styrolen, -siloxanen, -carbonaten, -amiden, -estern, -harnstoffen, -urethanen oder -sachariden führen. Insbesondere sind Oligo- und Polyacrylate, -methacrylate und -styrole sowie deren Mischoligo- oder -polymere gemeint.
D entspricht vorzugsweise der Formel

-CHY¹⁰-CHY¹¹- (CLXXI)

und
E und F entsprechen vorzugsweise unabhängig voneinander der Formel

-CHY¹²-CHY¹³ - (CLXXII),

worin
Y¹⁰ und Y¹² unabhängig voneinander für Wasserstoff oder C₁- bis C₄-Alkyl stehen,
Y¹¹ für Wasserstoff, Halogen, C₁- bis C₄-Alkyl, Aryl oder -COO-C₁- bis C₈-Alkyl steht und
Y¹³ für eine direkte Bindung oder eine der Brücken der Formeln -O-, -CO-O-, -CO-NH- oder -C₆H₄- zu B¹ bzw. B² steht.

Beispiele sind gemäß Formel (La) 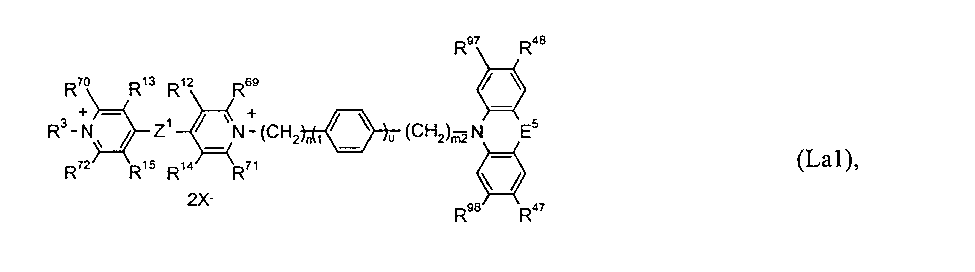 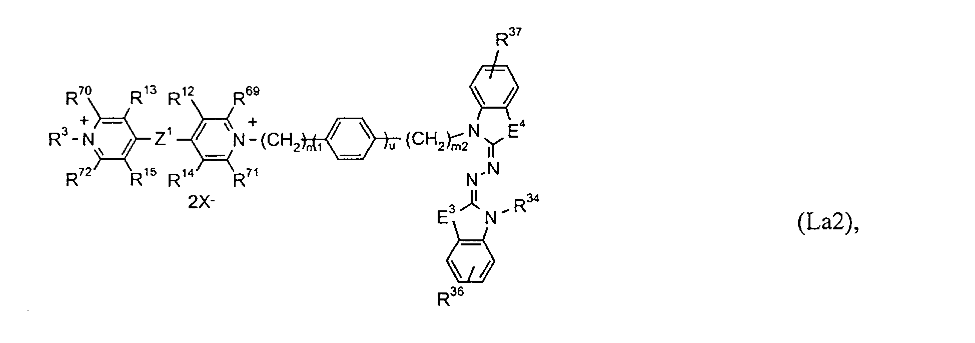 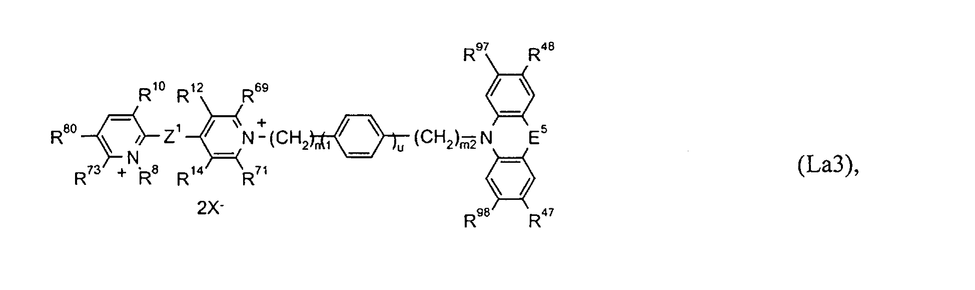 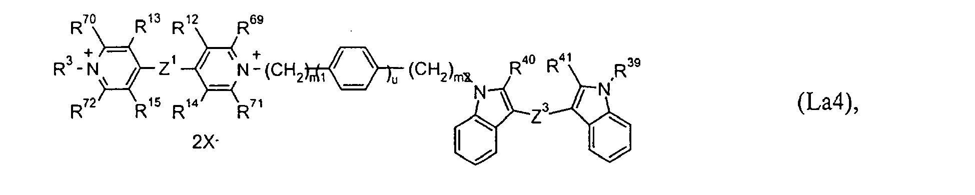 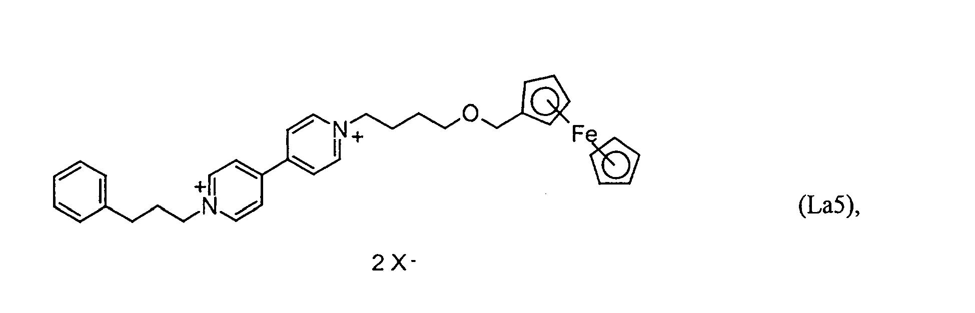 gemäß Formeln (Lb) 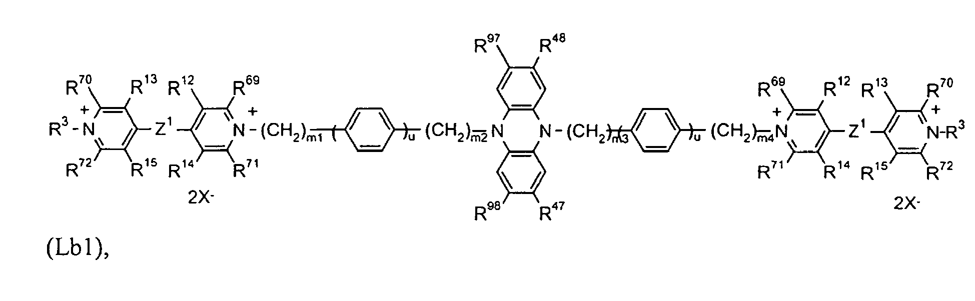 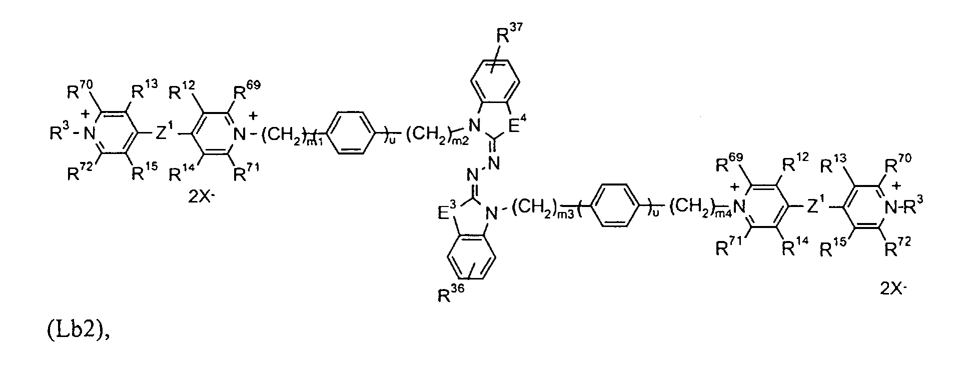 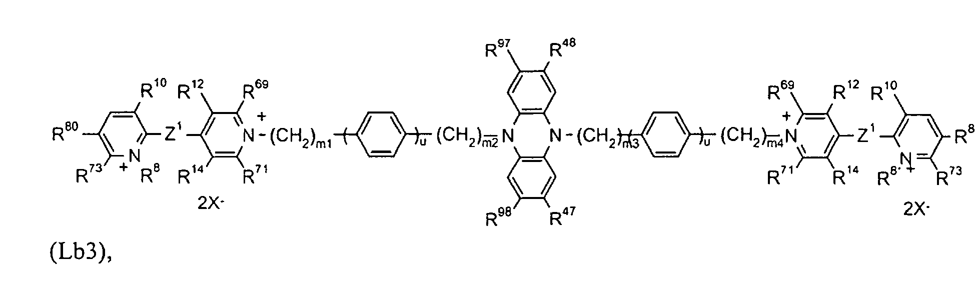 gemäß Formel (Lc) 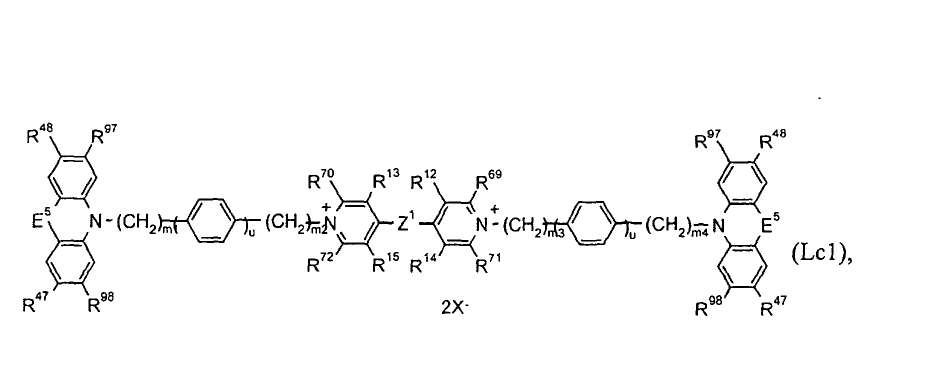 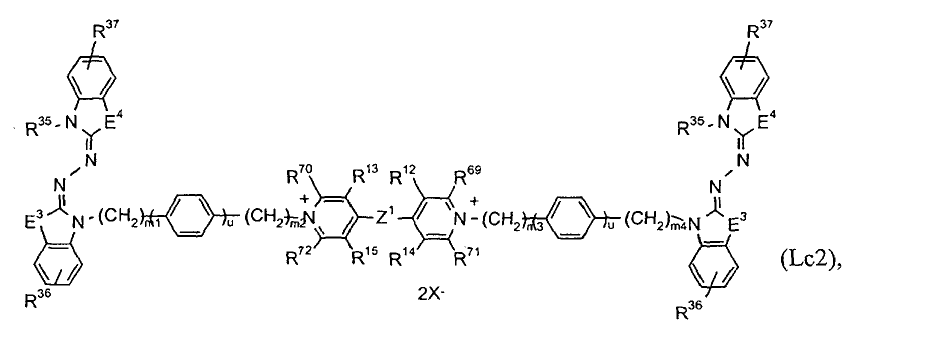 gemäß Formel (Ld) 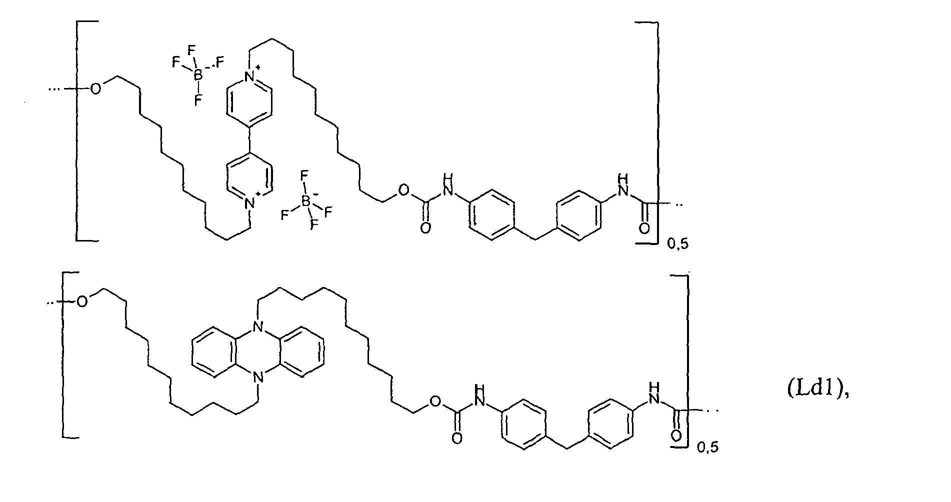 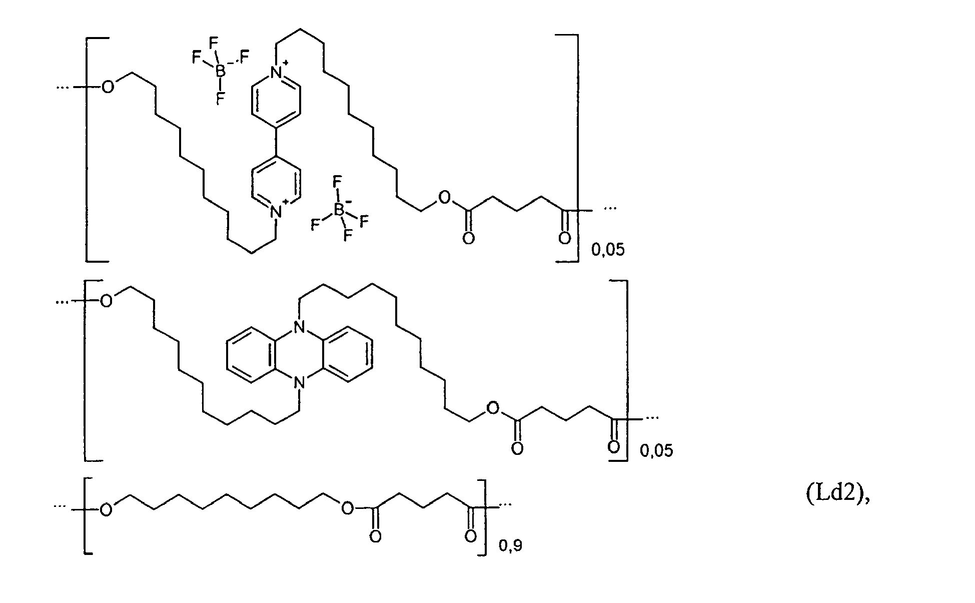 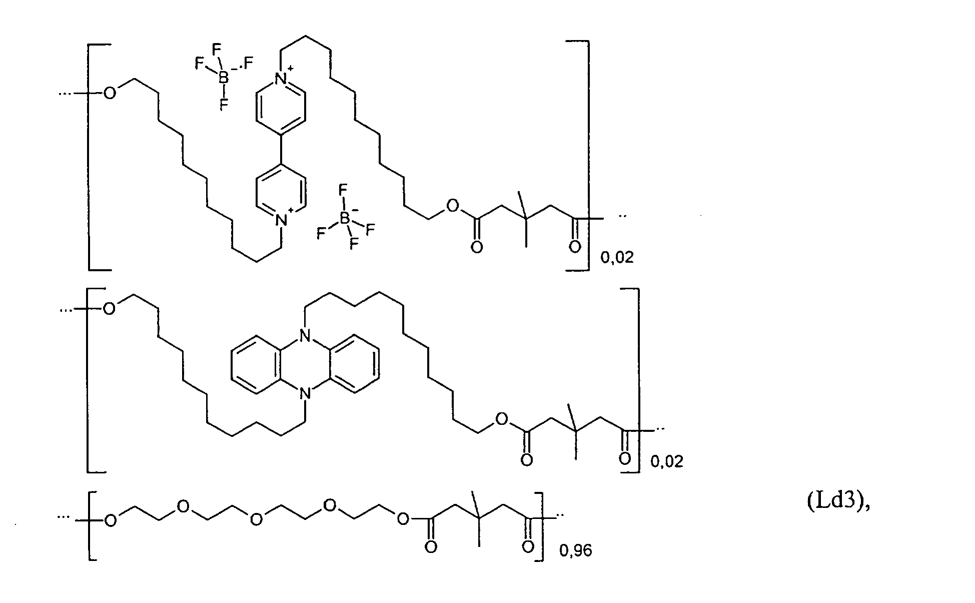 gemäß Formel (Le) 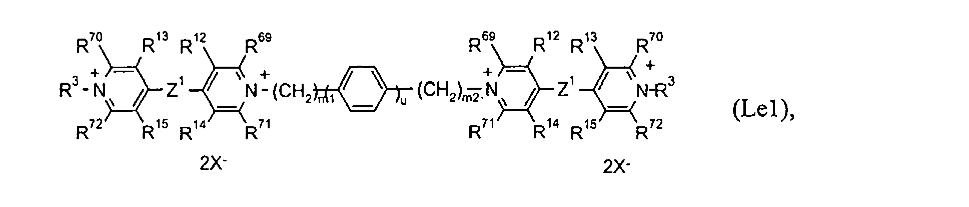 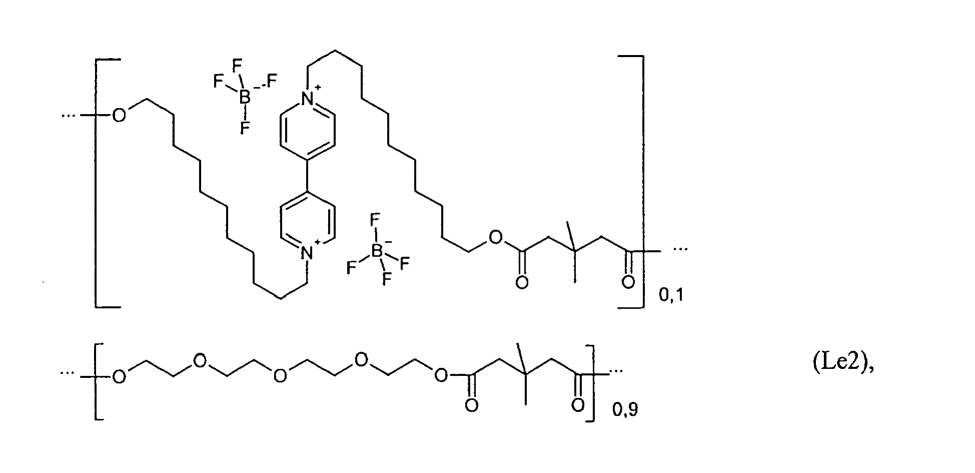 gemäß Formel (Lf) 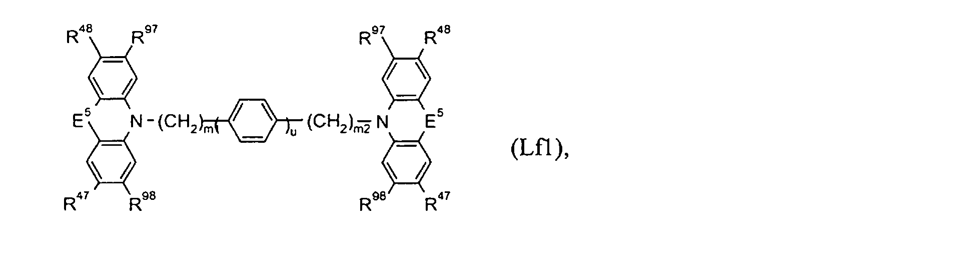 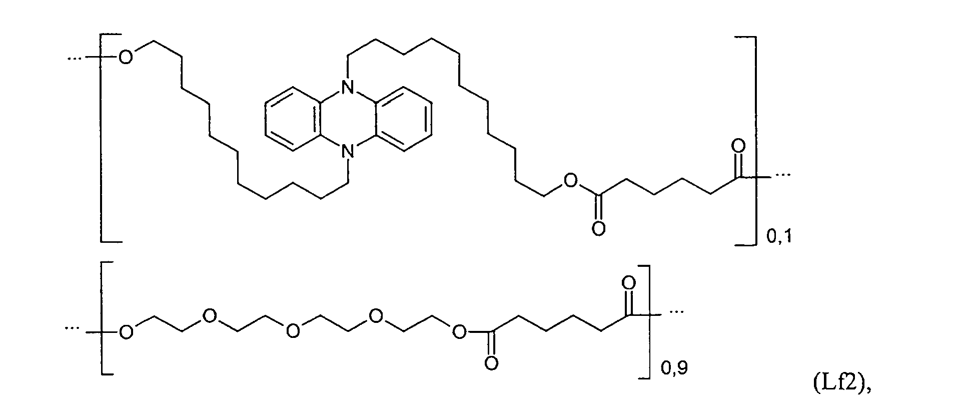 worin
m1 bis m4 unabhängig voneinander für eine ganze Zahl von 1 bis 5 stehen,
u für 0 oder 1 steht und
die anderen Reste die oben angegebene Bedeutung besitzen.

Beispiele sind gemäß Formel (CLa) 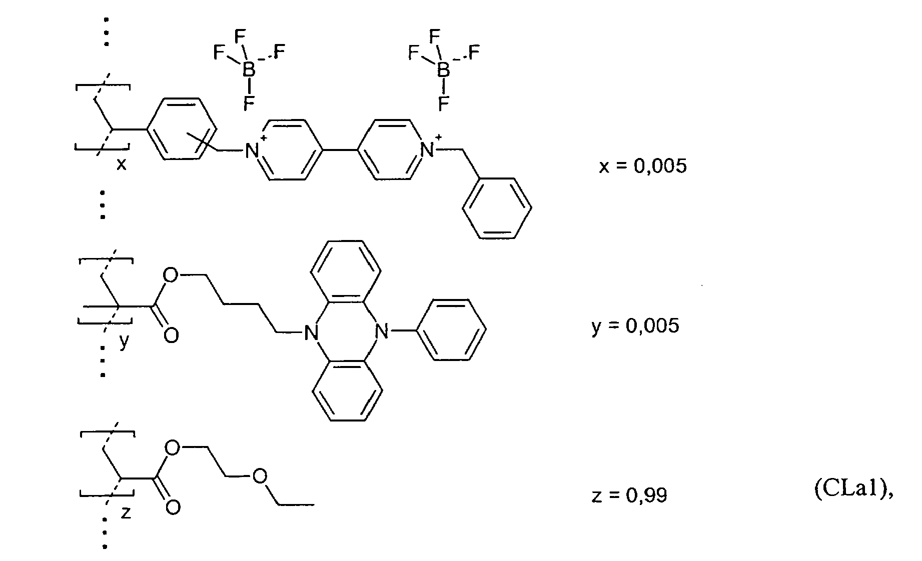 gemäß Formel (CLb) 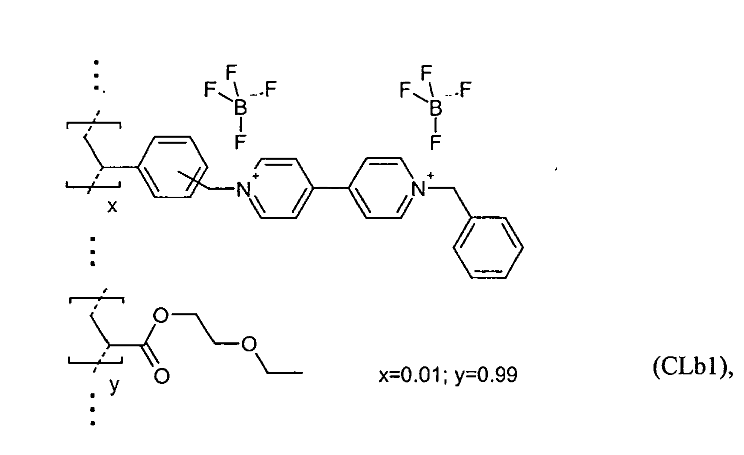 gemäß Formel (CLc) 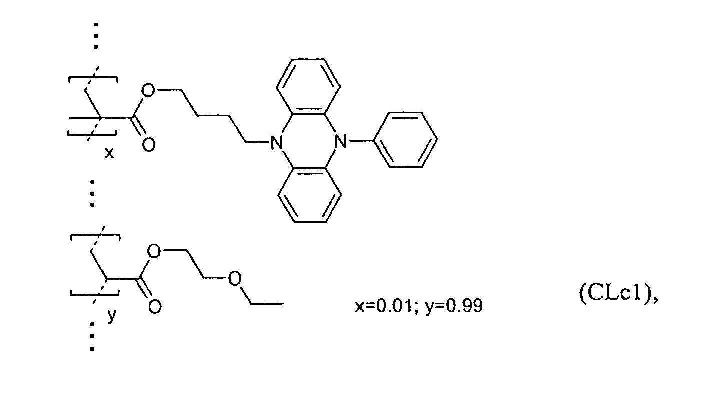 gemäß Formel (CLXa)

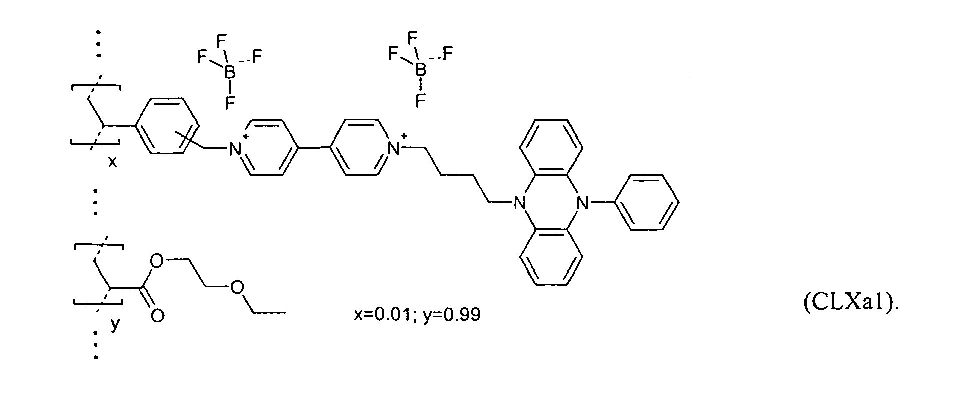

Beispiele für Metallsalze oder Metallkomplexe, die als OX₂ oder RED₁ eingesetzt werden können, sind Fe^{3+/2+}, Ni^{3+/2+}, Co^{3+/2+}, Cu^{2+/+}, [Fe(CN)₆]^{3-/4-}, Fe₄[Fe(CN)₆]₃^{0/4-}, [Co(CN)₆]^{3-/4}, [Fe(Cyclopentadienyl)₂]^{0/+}, Lu(Pc)^{2+ bis 2-} (Pc = Phthalocyanin), Fe[Fe(CN)₆]^{0/1-}.

Als Gegenionen für Metallionen und kationische Komplexe kommen alle redox-inerten Anionen X⁻, wie sie später noch genauer beschrieben werden, in Frage, als Gegenionen der anionischen Komplexe alle redox-inerten Kationen M'⁺ in Frage, beispielsweise Alkalimetalle oder quaternierte Ammoniumsalze wie Na⁺, K⁺, N(CH₃)₄⁺, N(C₄H₉)₄⁺, C₆H₅CH₂N(CH₃)₃⁺ und andere.

Ebenfalls bevorzugt ist eine erfindungsgemäße elektrochrome Vorrichtung, die Mischungen der oben allgemein und bevorzugt genannten elektrochromen Substanzen enthält. Beispiele für solche Mischungen sind (I) + (CI) + (XXVI), (I) + (IV) + (XXII), (La) + (I) + (XXVI), (La) + (CI), (LX) + (LXI), (LXV) + (XXVI), (CLII) + (XXVI), ohne daß dadurch irgendeine Einschränkung ausgedrückt werden soll.

Die Mischungsverhältnisse sind in weiten Grenzen variabel. Sie erlauben die Optimierung eines gewünschten Farbtons, insbesondere Grautons, und/oder die Optimierung der gewünschten Dynamik der Vorrichtung.

In den oben genannten Substituentenbedeutungen sind Alkylreste, auch abgewandelte, beispielsweise Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie C₁- bis C₄-Alkoxy, Fluor, Chlor, Hydroxy, Cyano, C₁- bis C₄-Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: C₁- bis C₆-Alkyl, C₁- bis C₆-Alkoxy, Fluor, Chlor, Brom, Cyano, Hydroxy, C₁- bis C₆-Alkoxycarbonyl oder Nitro. Zwei benachbarte Reste können auch einen Ring bilden.

Unter gegebenenfalls benzanellierten aromatischen oder quasiaromatischen fünf-oder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: C₁- bis C₆-Alkyl, C₁- bis C₆-Alkoxy, Fluor, Chlor, Brom, Cyano, Nitro, Hydroxy, Mono- oder Di-C₁- bis C₆-alkylamino, C₁- bis C₆-Alkoxycarbonyl, C₁- bis C₆-Alkylsulfonyl, C₁- bis C₆- Alkanoylamino, Phenyl oder Naphthyl. Zwei benachbarte Reste können auch einen Ring bilden.

Die elektrochromen Substanzen sind entweder bekannt (Topics in Current Chemistry, Vol. 92, S. 1-44, (1980), Angew. Chem. 90, 927 (1978) oder lassen sich analog herstellen. Die Verbindungen der Formel (L) sind ebenfalls bekannt (WO-A 97/30134) oder lassen sich aus an sich bekannten Bausteinen beispielsweise nach folgendem Schema synthetisieren:

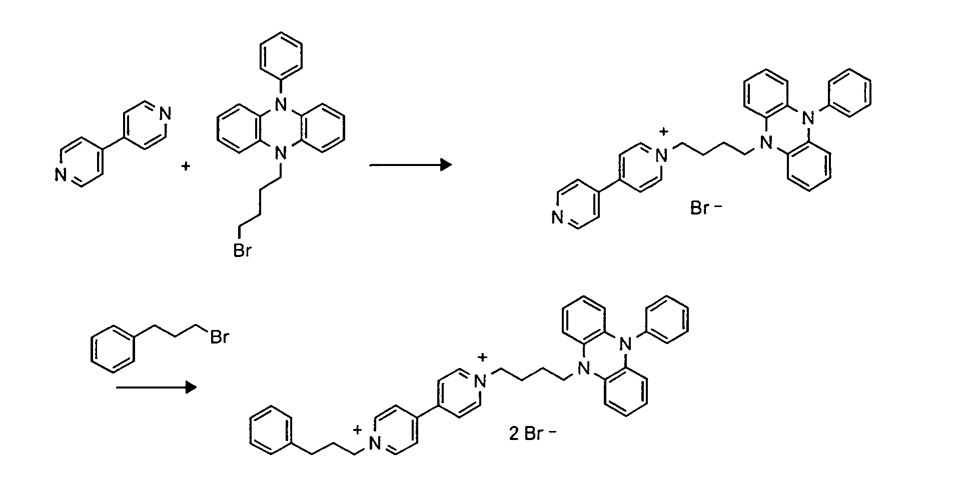

Die Verbindungen der Formel (CL) sowie (CLX) lassen sich aus an sich bekannten Bausteinen, beispielsweise den folgenden, durch Polymerisation herstellen:

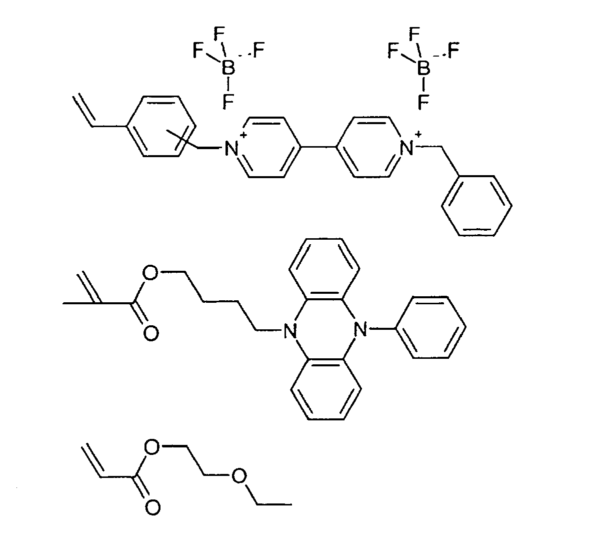

Synthetisch bedingte Ionen wie Bromid werden im Anschluß gegen redox-inerte Ionen ausgetauscht.

Besonders bevorzugt sind die elektrochromen Verbindungen der Formeln (I), (II), (III), (IV), (V), (XX), (XXII), (XXIII), (XXVI), (XXVII) und Ferrocen, sowie die mindestens eine dieser Formeln als OX₂ bzw. RED₁ enthaltenden überbrückten Verbindungen der Formel (L) oder Seitenkettenpolymeren der Formel (CL) oder (CLX).

Bei dieser Auswahl und ebenfalls bei den anschließend aufgeführten besonderen und herausragenden Auswahlen an elektrochromen Verbindungen muß stets sichergestellt sein, daß das elektrochrome Medium mindestens ein OX₂ und mindestens ein RED₁ enthält. Wenn beispielsweise OX₂ = Formel (I) ist, dann muß das elektrochrome Medium auch ein RED₁ enthalten, vorzugsweise aus der Auswahl der bevorzugten RED₁ der Formeln (XX), (XXII), (XXIII), (XXVI) und (XXVII), aber auch aus der oben allgemein aufgeführten Auswahl der RED₁ der Formeln (XX) bis (XXXIII) sowie der oben erwähnten, als RED₁ geeigneten Metallsalze, -komplexe oder Anionen X⁻. Dies gilt analog auch für die bevorzugten und besonders bevorzugten RED₁.

Ganz besonders bevorzugt sind die elektrochromen Verbindungen der Formeln (I), (II), (IV), (V), (XXII) (XXIII), (XXVI) und (XXVII),
worin
R², R³, R⁸ und R⁹ unabhängig voneinander Methyl, Ethyl, Propyl, Butyl, Pentyl, Hexyl, Heptyl, Benzyl, Phenethyl, Phenylpropyl, Phenyl, 2-Methylphenyl oder 2,6-Dimethylphenyl bedeuten oder
R⁸ und R⁹ gemeinsam eine -(CH₂)₂- oder -(CH₂)₃-Brücke bilden,
R¹⁰ bis R¹⁵ Wasserstoff bedeuten,
R⁶⁹ bis R⁷³, R⁸⁰ und R⁸¹ unabhängig voneinander Wasserstoff oder Methyl bedeuten oder
R¹²; R⁶⁹, R¹³; R⁷⁰, R⁷³; R⁸⁰ und/oder R⁷⁴; R⁸¹ eine -CH=CH-CH=CH-Brücke bilden,
Z¹ eine direkte Bindung oder -CH=CH- bedeutet,
Z² -(CH₂)ᵣ- bedeutet,
r eine ganze Zahl von 2 bis 6 bedeutet,
X⁻ ein unter den Bedingungen redox-inertes Anion bedeutet,
R³⁴, R³⁵, R³⁸ und R³⁹ unabhängig voneinander Methyl, Ethyl, Propyl, Butyl, Benzyl, Phenethyl, Phenylpropyl oder Phenyl bedeuten,
R³⁶ und R³⁷ Wasserstoff bedeuten,
Z³ eine direkte Bindung oder eine -CH=CH-Brücke bedeutet,
Z⁴ eine direkte Doppelbindung bedeutet,
R⁴⁰ und R⁴¹ gleich sind und Wasserstoff oder Methyl bedeuten,
E³ und E⁴ gleich sind und S, N-R⁵⁹ oder C(CH₃)₂ bedeuten,
E⁵ NR⁵⁹ bedeutet
E⁶ bis E⁹ gleich sind und S bedeuten,
R⁴⁷, R⁴⁸, R⁹⁷ und R⁹⁸ unabhängig voneinander Wasserstoff, Methyl, Methoxy, Cyan, Phenyl oder Phenoxy bedeuten,
R⁴⁹ bis R⁵² unabhängig voneinander Wasserstoff, Methyl, Cyano oder Methoxycarbonyl bedeuten oder
R⁴⁹; R⁵⁰ und/oder R⁵¹; R⁵² eine -(CH₂)₃- oder -CH=CH-CH=CH-Brücke bilden,
R⁴⁶ und R⁵⁹ unabhängig voneinander Methyl, Ethyl, Propyl, Butyl oder Phenyl bedeuten und
R⁹⁹ und R¹⁰⁰ Wasserstoff bedeuten,
sowie die mindestens eine dieser Formeln als OX₂ bzw. RED₁ enthaltenden überbrückten Verbindungen der Formel (L), insbesondere der Formel (La), wobei
B -(CH₂)ₙ- bedeutet und
n eine ganze Zahl von 3 bis 6 bedeutet,
sowie die mindestens eine dieser Formeln als OX₂ bzw. RED₁ enthaltenden Seitenkettenpolymeren der Formel (CL) und (CLX), insbesondere der Formel (CLXa),
wobei
D für die Formel (CLXXI) steht,
E und F für die Formel (CLXXII) stehen,
Y¹⁰ und Y¹² unabhängig voneinander für Wasserstoff oder Methyl stehen,
Y¹¹ für -COOCH₃ oder -COOCH₂CH₂OCH₂CH₃ steht,
Y¹³ für eine Brücke der Formeln -CO-O- oder -C₆H₄- zu B¹ bzw. B² steht,
B¹ und B² unabhängig voneinander für eine Brücke der Formeln -(CH₂)ₙ- stehen und
n eine ganze Zahl von 1 bis 6 bedeutet.

Im Sinne der Erfindung ganz herausragend geeignet sind die elektrochromen Verbindungen der Formeln (I) und (II),
worin
R² und R³ gleich sind und Methyl, Ethyl, Butyl, Heptyl oder Phenylpropyl bedeuten,
R¹² bis R¹⁵ und R⁶⁹ bis R⁷² Wasserstoff bedeuten,
Z¹ eine direkte Bindung bedeutet,
Z² -(CH₂)₃- oder -(CH₂)₄- bedeutet und
X⁻ ein redoxinertes Anion oder I⁻ bedeutet.

Im Sinne der Erfindung ganz herausragend geeignet sind die elektrochromen Verbindungen der Formel (XXVI),
worin
E⁵ für NR⁵⁹ steht,
R⁴⁶ und R⁵⁹ unabhängig voneinander für Methyl, Ethyl, Propyl, Butyl, Phenylpropyl oder Phenyl stehen,
R⁴⁷, R⁴⁸, R⁹⁷ und R⁹⁸ unabhängig voneinander für Wasserstoff, Phenyl oder Phenoxy stehen und
R⁹⁹ und R¹⁰⁰ für Wasserstoff stehen.

Im Sinne der Erfindung ebenfalls ganz herausragend geeignet sind die elektrochromen Verbindungen der Formel (La),
worin
OX₂ für einen Rest der Formel (I) steht,
RED₁ für einen Rest der Formel (XXVI) steht und
B für -(CH₂)ₙ- steht,
wobei
n eine ganze Zahl von 3 bis 6 bedeutet,
R²und R⁴⁶ eine direkte Bindung zu B bedeuten,
R³, R¹² bis R¹⁵, R⁶⁹ bis R⁷², Z¹ und X⁻ die oben angegebene herausragende Bedeutung besitzen,
R⁴⁷, R⁴⁸, R⁹⁷ bis R¹⁰⁰ Wasserstoff bedeuten oder maximal 2 der Reste R⁴⁷, R⁴⁸, R⁹⁷ und R⁹⁸ Phenoxy bedeuten,
E⁵ NR⁵⁹ bedeutet und
R⁵⁹ Methyl, Ethyl, Butyl, Heptyl, Phenylpropyl oder Phenyl bedeutet.

Im Sinne der Erfindung ebenfalls ganz herausragend geeignet sind die elektrochromen Verbindungen der Formel (CLXa),
worin
OX₂ für einen Rest der Formel (I) steht,
RED₁ für einen Rest der Formel (XXVI) steht,
D für die Formel (CLXXI) steht,
E für die Formel (CLXXII) steht,
Y¹⁰ und Y¹² unabhängig voneinander für Wasserstoff oder Methyl stehen,
Y¹¹ für -COOCH₂CH₂OCH₂CH₃ steht,
Y¹³ für eine Brücke der Formeln -CO-O- oder -C₆H₄- zu B¹ bzw. B² steht,
B¹ und B² unabhängig voneinander für eine Brücke der Formeln -(CH₂)ₙ- stehen
wobei
n eine ganze Zahl von 1 bis 6 bedeutet,
R² eine direkte Bindung zu B¹ bedeutet,
R³ und R⁴⁶ eine direkte Bindung zu B² bedeuten,
R¹² bis R¹⁵, R⁶⁹ bis R⁷², Z¹ und X⁻ die oben angegebene herausragende Bedeutung besitzen,
R⁴⁷, R⁴⁸, R⁹⁷ bis R¹⁰⁰ Wasserstoff bedeuten oder maximal 2 der Reste R⁴⁷, R⁴⁸, R⁹⁷ und R⁹⁸ Phenoxy bedeuten,
E⁵ NR⁵⁹ bedeutet und
R⁵⁹ Methyl, Ethyl, Butyl, Heptyl, Phenylpropyl oder Phenyl bedeutet.

Die erfindungsgemäße elektrochrome Vorrichtung enthält in ihrem elektrochromen Medium gegebenenfalls mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Bei Verwendung polymerer elektrochromer Verbindungen insbesondere der Formeln (L) und (Ld) bis (Lf) sowie (CL) und (CLa) bis (CLc) sowie (CLX) und (CLXa) bis (CLXb) kann auf das Lösungsmittel verzichtet werden. Es können auch solche Polymeren gemischt werden, z.B. Formel (LXV) und (LXVII). Gegebenenfalls werden dem Polymer weitere OX₂ oder RED₁ untergemischt, z.B. Formel (XXVI) in Polymer der Formel (LXV).

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Benzonitril, Glutaronitril, Methylglutamitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat, Benzonitril und Mischungen untereinander oder mit Glutaronitril oder 3-Methylsulfolan. Insbesondere bevorzugt ist Propylencarbonat. Ebenfalls insbesondere bevorzugt ist Benzonitril.

Das elektrochrome Medium kann mindestens ein inertes Leitsalz enthalten. Insbesondere wenn wenigstens eine der Substanzen des Redoxpaares RED₁/OX₂ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X⁻ in den Formeln (I) bis (VI), (CI), (CII) und (CV) bis (CVII) und in den Metallsalzen kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Trifluormethylbenzolsulfonat, Hexafluorophosphat, Hexafluoroarsenat, Hexafluorosilicat, 7,8- oder 7,9-Dicarbanidoundecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Ebenfalls geeignet, auch als Anionen X in den Formeln (I) bis (VI), (CI), (CII) und (CV) bis (CVII) und in den Metallsalzen, sind die oben erwähnten Anionen, die auch die Rolle eines RED₁ übernehmen können, beispielsweise I⁻, I₃⁻.

Wie beispielsweise aus K. Deuchert und S. Hünig, Angew. Chem. 90, 927-938 (1978) und S. Hünig und H. Bemeth, Topics in Current Chemistry, Vol. 92, S. 1-44 (1980) bekannt ist, existieren viele Redoxsysteme, beispielsweise die der Formeln (I) bis (XII) und (XX) bis (XXXIII) in drei Oxidationsstufen, die miteinander im Gleichgewicht stehen:

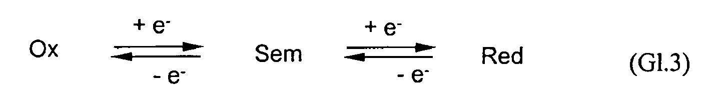

Sem ist eine radikalische Spezies und in der Regel tieffarbig, während Ox und Red farblos oder weniger tief (hypsochrom relativ zu Sem) gefärbt sind.

Bevorzugte OX₃ sind die aus entsprechenden RED₃, insbesondere der Formeln (XII) bis (XX), im Sinne dieser Gleichung durch Einelektronenoxidation entstehenden Oxidationsstufen Sem und die durch Zweielektronenoxidation entstehenden Oxidationsstufen Ox.

Bevorzugte RED₃ sind die aus entsprechenden OX₃, insbesondere der Formeln (I) bis (XII), im Sinne dieser Gleichung durch Einelektronenreduktion entstehenden Oxidationsstufen Sem und die durch Zweielektronenreduktion entstehenden Oxidationsstufen Red.

Diese OX₃ bzw. RED₃ können auch in Oligo- oder Polymere der Formeln (L), (CL) oder (CLX) eingebaut sein, wobei wenigstens ein Y oder Z für OX₃ bzw. RED₃ steht und die anderen für OX₂ und/oder RED₁ stehen.

Durch Dis- oder Komproportionierungsreaktionen können die OX₃ bzw. RED₃ mit den anderen elektrochromen Substanzen OX₂ und RED₁ des elektrochromen Mediums reagieren. In der Regel wird OX₃ bzw. RED₃ im stromlosen elektrochromen Medium in der Oxidationsstufe Sem vorliegen, vorausgesetzt, es handelt sich um ein der oben beschriebenen, der Gleichung 3 gehorchendes Redoxsystem.

Analoges gilt für Metallsalze und -komplexe. Unterscheiden sich die Oxidationsstufen solcher Salze oder Komplex dagegen nur um 1, wie z.B. in [Fe(Cyclopentadienyl)₂]^{0/+}, dann entfällt die Oxdationsstufe Sem gemäß Gleichung 3.

Bevorzugte OX₃ sind demnach [Fe(Cyclopentadienyl)₂]⁺, die Oxidationsstufe Sem von Verbindungen der Formel (XXII), (XXIII), (XXIV), (XXV), (XXVI), besonders bevorzugt sind [Fe(Cyclopentadienyl)₂]⁺ und die Oxidationsstufe Sem von Verbindungen der Formeln (XXII) und (XXVI).

Bevorzugte RED₃ sind demnach die Oxidationsstufe Sem von Verbindungen der Formeln (I), (II), (III), (IV) und (V), besonders bevorzugt ist die Oxidationsstufe Sem der Formel (IV).

OX₃ bzw. RED₃ können dem elektrochromen Medium als Substanz zugesetzt werden oder aber im Medium erzeugt werden, z.B. durch Komproportionierungs- oder Disproportionierungsreaktionen oder andere Redoxreaktionen.

Beispiele für direkt zugegebene OX₃ bzw. RED₃ sind [Fe(Cyclopentadienyl)₂]⁺ und die Oxidationsstufe Sem von Verbindungen der Formeln (XXII), (XXVI) und (IV).

Ein Beispiel für eine Komproportionierungsreaktion ist die Reaktion der Oxidationsstufen Red und Ox von Verbindungen der Formel (XXII) entsprechend der Formelgleichung

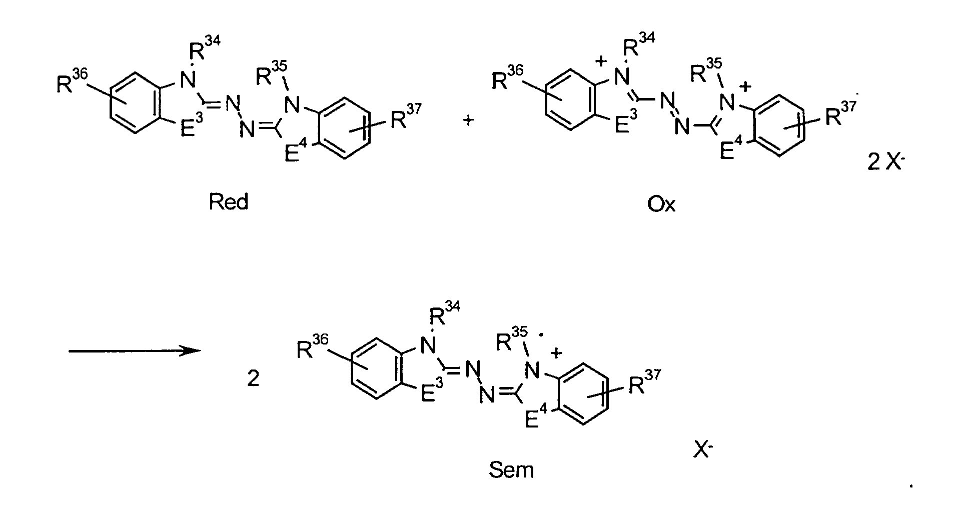

Unter anderen Redoxreaktionen wird beispielsweise die Reduktion oder Oxidation von elektrochromen Verbindungen des elektrochromen Mediums, vorzugsweise einem Teil (<30 %, bevorzugt <10 % der in dem elektrochromen Medium vorhandenen Menge) von OX₂ bzw. RED₁ zu vorzugsweise ihren Oxidationsstufen Sem, die die Rolle von RED₃ bzw. OX₃ übernehmen, durch ein Reduktions- bzw. Oxidationsmittel verstanden, dessen Redoxpotential vom Betrag her größer ist als das von OX₂ bzw. RED₁. Ein Beispiel für eine solche andere Redoxreaktion unter Beteiligung einer Verbindung der Formel (XXVI) und eines Metallkomplexes ist in der folgenden Formelgleichung dargestellt:

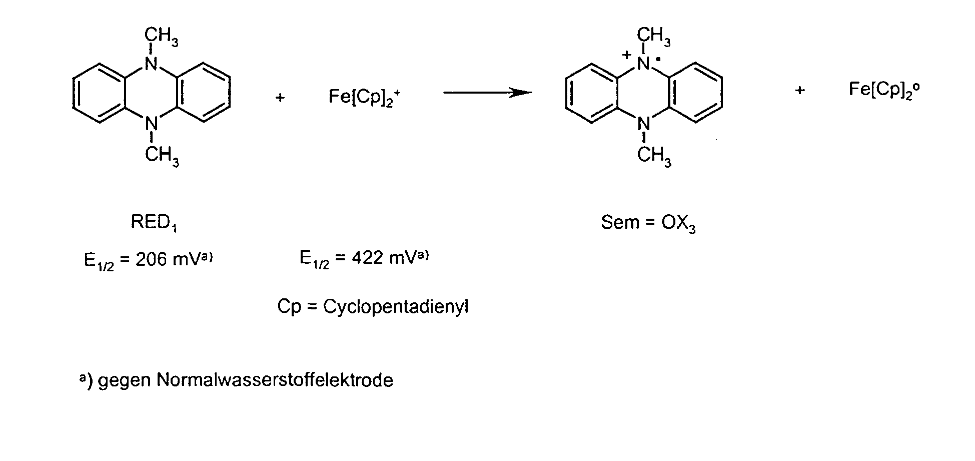

Das bei der Redoxreaktion aus dem Oxidations- bzw. Reduktionsmittel entstehende Produkt (hier Fe[Cp]₂) kann schließlich in dem elektrochromen Medium die Rolle eines RED₁ (wie im Falle des Beispiels der Formelgleichung) bzw. OX₂ übernehmen.

Beispiele für Kombinationen von OX₂, RED₁ und OX₃/RED₃ sind tn den folgenden Tabellen zusammengestellt:

| Beispiel | OX₂ | RED₁ | OX₃ |
|---|---|---|---|
| a | 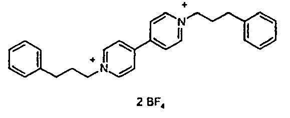 | Fe[Cp]₂ ^{a)} | Fe[Cp]₂⁺ BF₄^{-a)} |
| b | 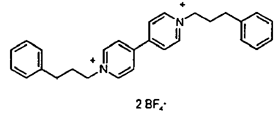 | 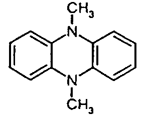 | 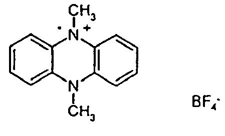 |
| c | 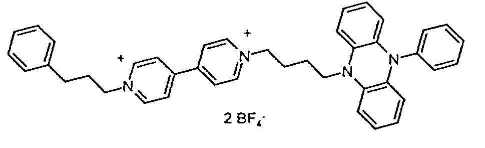 | | 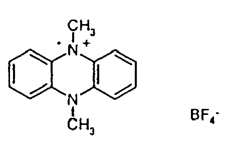 |
| d | 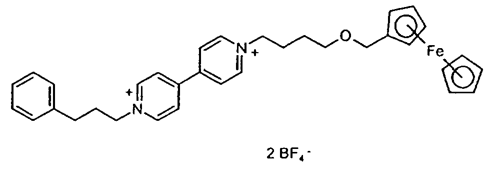 | | Fe[Cp]₂⁺ BF₄^{-a)} |
| e | 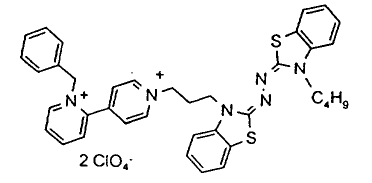 | | 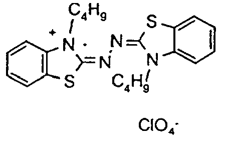 |
| f | 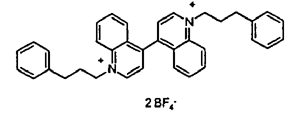 | 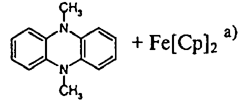 | 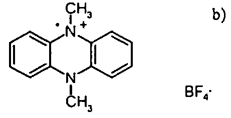 |

| Beispiel | OX₂ | RED₁ | RED₃ |
|---|---|---|---|
| g | 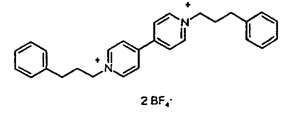 | 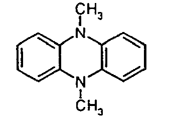 | 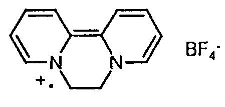 |
| h | 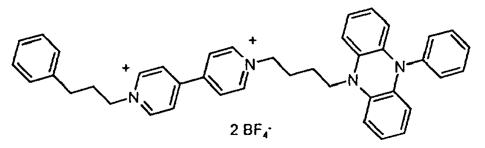 | | 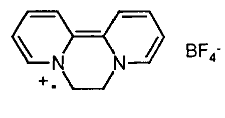 |

| | | | |
|---|---|---|---|
| ^{a)} Cp = Cyclopentadienyl ^{b)} aus 5,10-Dimethyldihydrophenazin + Fe[Cₚ]₂⁺BF₄⁻ | | | |

Die oben geschilderten Vorteile der beschleunigten Selbstlöschung und der erhöhten Kantenschärfe machen die erfindungsgemäßen elektrochromen Medien besonders geeignet für den Einsatz in erfindungsgemäßen elektrochromen Vorrichtungen.

Insbesondere handelt es sich bei diesen Vorrichtungen um Anzeigevorrichtungen. Bei solchen Anzeigevorrichtungen ist mindestens eine der beiden leitfähigen Schichten in elektrisch voneinander isolierte Segmente aufgeteilt, die über Zuleitungen elektrisch kontaktiert sind. Diese Zuleitungen sind vorteilhaft vom elektrochromen Medium elektrisch isoliert. Die Anzeigevorrichtungen können je nach Strukturierung der Aufteilung in Segmente einfache Symbole, Schriftzeichnen oder Zahlen anzeigen, oder Balken oder Punkte, die zur Anzeige von komplexen Mustern wie Schriftzeichen oder Zahlen, aber auch von Bildern dienen können. Solche Anzeigevorrichtungen können auch Bestandteil eines Berührungssensors sein, d. h. sie sind in den Sensor integriert und zeigen seinen Schaltzustand an. Ein Berührungssensor reagiert beispielsweise auf Druck, Änderung des Leitvermögens für Strom oder Licht oder Änderung der Induktivität. In der Regel besteht er aus einer Platte, deren Berührung den Sensor auslöst. In diese Platte kann nun eine erfindungsgemäße Anzeigevorrichtung integriert sein, wobei sie sich sowohl in als auch außerhalb des berührungsempfindlichen Teils der Platte befinden kann.

Insbesondere handelt es sich bei den erfindungsgemäßen elektrochromen Vorrichtungen um Analoganzeigen. Bei Analoganzeigen sind die beiden leitfähigen Beschichtungen im allgemeinen nicht in Segmente aufgeteilt. Sie können aber unterschiedliche Leitfähigkeit aufweisen. Beispielsweise wird eine solche Vorrichtung aus zwei streifenförmigen oder bogenförmigen Platten oder Folien aufgebaut, denen an den beiden gegenüberliegenden Enden Spannung zugeführt wird. Zusätzlich können die beiden leitfähigen Schichten an einem Ende der Vorrichtung elektrisch miteinander verbunden sein, z.B. über einen Widerstand oder über eine Regeleinheit. Die Vorrichtung kann aber auch kreisförmig, oval, rechteckig oder quadratisch oder in einer ähnlichen Form aufgebaut sein. Durch mindestens eine elektrische Verbindung zwischen den leitfähigen Schichten der beiden Platten oder Folien an beliebiger Stelle bauen sich beim Anlegen von Spannung beliebige Farbtiefegradienten auf, die zu Anzeigezwecken dienen können. Eine kreisrunde oder quadratische Anordnung mit einer elektrischen Verbindung in ihrem Mittelpunkt kann als regelbare Blende für Licht dienen.

Insbesondere handelt es sich bei den erfindungsgemäßen elektrochromen Vorrichtungen um Vorrichtungen aller Art, bei denen die schnelle Selbstlöschung von Bedeutung ist. Das können beispielsweise auch Einsegmentvorrichtungen sein, die beispielsweise zur Anzeige eines sich schnell ändernden Schaltzustands verwendet werden. Auch Brillengläser, Sichtschutzscheiben oder Automobilrückspiegel können solche Anwendungen sein.

Bei Anzeigevorrichtungen findet durch Anwendung des erfindungsgemäßen elektrochromen Mediums eine schnelle Selbstlöschung der geschalteten Segmente statt, wenn sie vom geschalteten in den nichtgeschalteten, bespielsweise kurzgeschlossenen Zustand übergehen. Eine rasche Veränderung des angezeigten Bildes wird so möglich. Dies ist auch dann der Fall, wenn ein Segment lange Zeit eingeschaltet war. Darüberhinaus zeigen die Segmente eine erhöhte Kantenschärfe und eine Verringerung von farbigen Zonen um das Segment herum, die durch laterale Diffusion der farbigen elektrochromen Substanzen entstehen können.

Bei Analoganzeigen oder Blenden bewirkt die Verwendung des erfindungsgemäßen elektrochromen Mediums eine scharfe Grenze zwischen der farbigen und der farblosen Zone sowie eine rasche Verschiebbarkeit dieser Grenze bei Änderung der angelegten Spannung, also ein rasches Reagieren auf sich schnell ändernde Signale. Das ist insbesondere bei einer Blende in einem photographischen Apparat oder einer Filmkamera wichtig.

### Figuren:

Die Erfindung wird durch die nachfolgenden Figuren näher erläutert. Es zeigen:
- Fig.1: Schema einer strukturierten elektrochromen Zelle
- Fig.2: Elektro-optische Kennlinie zweier Beispielzellen: Relative Transmission (= Verhältnis der Transmission bei der Zellenspannung U zur Transmission bei der Zellenspannung 0) in Abhängikeit der Zellenspannung
- Fig. 3: Einschaltcharakteristik dieser Beispielzellen: Zeitlicher Verlauf der relativen Transmission nach Umschalten der Zellenspannung von 0 nach 1 Volt.
- Fig. 4: Ausschaltcharakteristik dieser Beispielzellen:
Zeitlicher Verlauf der relativen Transmission nach Umschalten der Zellenspannung von 1 Volt nach 0.
Die vorangegangene Anschaltzeit (Zellenspannung 1 Volt) betrug 60 Sekunden.
- Fig. 5: Schema einer elektrochromen Analoganzeige.
- Fig. 6: Schema einer elektrochromen Blende.

### Beispiel 1 (Anzeigevorrichtung, Testaufbau)

Eine mit ITO beschichtete Glasplatte (50x45 mm²) wurde auf der ITO-beschichteten Seite mit einem Klebebandstreifen (Tesapack 124 der Fa. Beiersdorf, Hamburg), der ca. 7 mm breit und ca. 20 mm lang war, vom Rande der kürzeren Kante der Glasplatte her in das Innere abgeklebt. Die so vorbereitete Glasplatte wurde in ein wässriges Bad mit 47,5 %-iger konzentrierter Salzsäure und 5 % Eisen(III)-Chlorid gegeben, das auf ca. 40°C aufgeheizt war. Nach 10 min wurde die Glasplatte entnommen und mit destilliertem Wasser abgespült. Man erhielt so eine Glasplatte (1), die nur einen 20x7 mm² großen ITO-Streifen (2) trug.

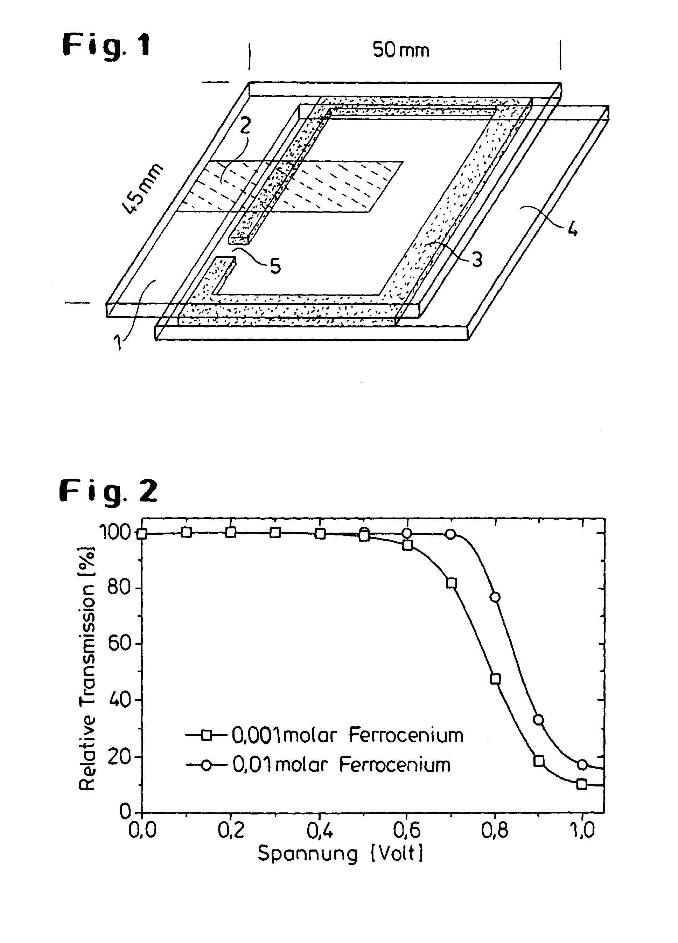

Eine Mischung aus 97 % photohärtendem Epoxikleber DELO-Katiobond^{®} 4594, DELO Industrieklebstoffe, Landsberg, und 3 % Glaskugeln mit 100 µm Durchmesser wurde ringförmig (3) auf die mit ITO-beschichtete Seite einer zweiten Glasplatte (4) (50x45 mm²) aufgetragen, wobei eine Öffnung (5) ausgespart wurde. Nun wurde die erste Glasplatte (1) so auf die Kleberaupe gelegt, daß die ITO-Schichten der beiden Platten (1) und (4) einander zugewandt waren. Die Aushärtung des Klebers erfolgte durch 10-minütiges Belichten mit Tageslicht in der Nähe eines Fensters und anschließend für 20 min bei 105°C ohne Belichtung. Man erhielt so eine Zelle, wie sie in Fig. 1 dargestellt ist.

Dann wurde die Zelle unter Stickstoffatmosphäre mit der Öffnung (5) nach unten senkrecht in eine Schale gestellt, die eine Lösung enthielt, die 0,05 molar an der elektrochromen Verbindung der Formel 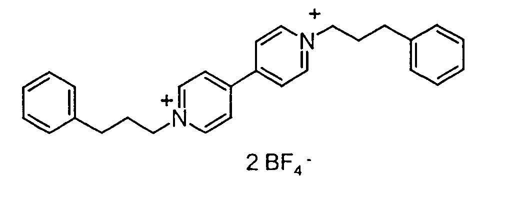 sowie 0,05 molar an Ferrocen der Formel 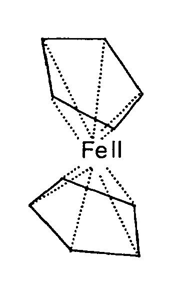 und 0,001 molar an Ferroceniumtetrafluoroborat der Formel 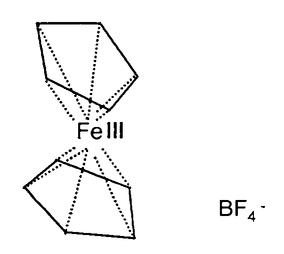 und schließlich 0,2 molar an UV-Absorber der Formel 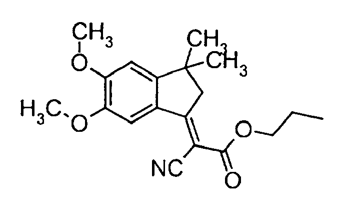 in wasserfreiem, sauerstofffreiem Propylencarbonat war. Dabei befand sich die Öffnung (5) der Zelle unterhalb des Flüssigkeitsspiegels in der Schale. Die Schale mit der Zelle wurde in einen Exsiccator gestellt. Dieser wurde auf 0,05 mbar evakuiert und anschließend vorsichtig mit Stickstoff belüftet. Während der Belüftung stieg die elektrochrome Lösung in die Zelle hinein und füllte bis auf eine kleine Blase das gesamte Volumen aus. Die Zelle wurde aus der Lösung entnommen, unter Stickstoffatmoshäre an der Öffnung (5) gereinigt, indem sie mit einem Papiertuch abgeputzt wurde, und anschließend mit dem photohärtenden Epoxikleber DELO-Katiobond^{®} 4594, DELO Industrieklebstoffe, Landsberg, verdickt mit 2 % Kieselgel-Aerosil, verschlossen. Zuletzt wurde 10 min mit Tageslicht in der Nähe eines Fensters belichtet und bei Raumtemperatur über Nacht ausgehärtet.

Die derart hergestellte Zelle wird im folgenden als **Zelle 1** bezeichnet.

Außerdem wurde eine zweite Zelle (= **Zelle 2**) auf dieselbe Weise wie soeben beschrieben hergestellt mit dem einzigen Unterschied, daß die elektrochrome Flüssigkeit statt 0,001 molar jetzt 0,01 molar an Ferroceniumtetrafluoroborat war.

Von diesen beiden Zellen wurde die stationäre elektro-optische Kennlinie, also der Zusammmenhang zwischen der Zellenspannung und der sich stationär einstellenden optischen Transmission, mit dem Display Measuring System der Firma autronic-MELCHERS GmbH, Karlsruhe, vom Typ DMS 301 durchgeführt. Das Ergebnis dieser Messung zeigt die Fig. 2. Die Aufsteilung der elektro-optischen Kennlinie mit zunehmendem Gehalt an Ferrocenium ist deutlich zu erkennen, insbesondere im Bereich niedriger Zellenspannungen. Zum Beispiel hat bei einer Zellenspannung von 0,65 Volt die Transmission der Zelle 1 bereits um 9,2 % abgenommen, bei der Zelle 2 jedoch lediglich um 0,3 %. Diese Aufsteilung der elektro-optischen Kennlinie ist für viele technische Anwendungen von großem Vorteil.

Ebenfalls mit dem Display Measuring System DM 301 wurde die optische Schaltcharakteristik gemessen, also die zeitliche Entwicklung der optischen Transmission im Anschluß an eine sprunghafte Änderung der Zellenspannung von 0 Volt auf 1,05 Volt (Einschaltcharakteristik) bzw. von 1,05 Volt auf 0 Volt (Ausschaltcharakteristik). Nach dem Abschluß der Messung der Einschaltcharakteristik wurde in einem Fall direkt mit der Messung der Abschaltcharakteristik begonnen. Im zweiten Fall wurde vor der Messung der Abschaltcharakteristik 60 sec bei weiterhin an die Zelle angelegter Spannung von 1,05 Volt gewartet.

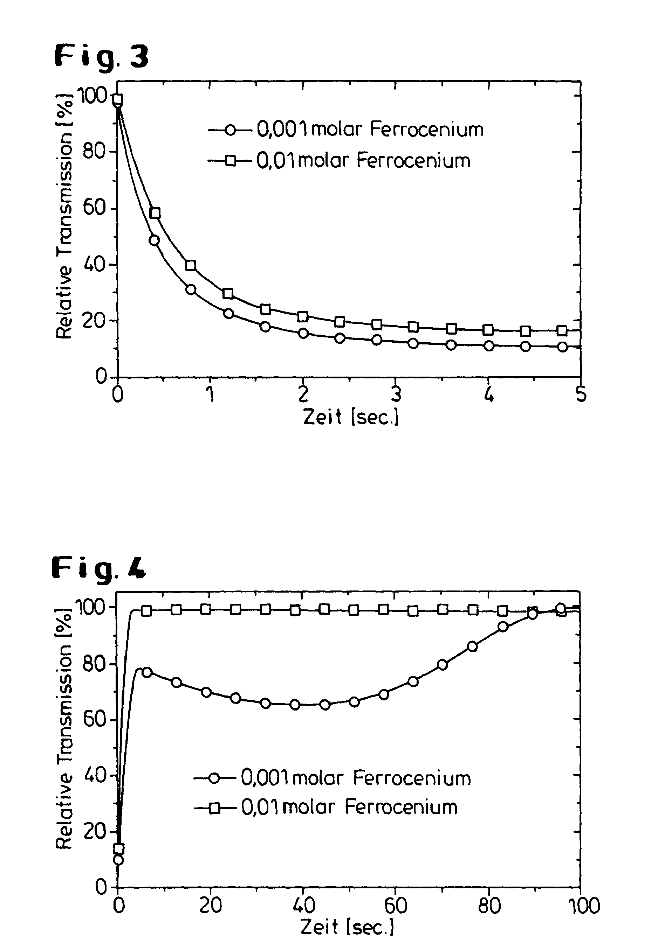

Die in den Fig. 3 und 4 wiedergegebenen Meßergebnisse dokumentieren das durch die höhere Konzentration an Ferroceniumtetrafluoroborat verbesserte Schaltverhalten der elektrochromen Zelle 2. Die Einschaltcharakteristik ändert sich nur wenig, die Zelle wird mit steigendem Ferroceniumgehalt sogar geringfügig langsamer. Im Abschaltverhalten wird sie aber deutlich schneller. Der Wiederanstieg der Transmission um 50 % des ursprünglichen Transmissionshubs erfolgt bei der Zelle 1 in 1,6 sec, bei der Zelle 2 jedoch in 0,8 sec.

Noch deutlicher ist der Effekt des Ferroceniums bezüglich des sogenannten Speichereffektes. Damit ist die Veränderung der Abschaltcharakteristik mit der Zeitdauer gemeint, während der die Zelle vor dieser Messung geschaltet war. Bei nur geringem Ferroceniumgehalt (Zelle 1) schaltet die Zelle nach 60 sec Wartezeit bei 1,05 V zunächst nur auf einen Transmissionswert zurück, der gut 20 % unter dem Startwert liegt. Diese Restfärbung geht dann erst nach etwa 90 sec vollständig zurück. Die Zelle 2 dagegen zeigt bei 60 sec Wartezeit praktisch keinen Speichereffekt.

Eine Zelle, die wie Zelle 1 hergestellt wurde, aber kein Ferroceniumtetrafluoroborat enthielt, verhielt sich in allen hier geschilderten Eigenschaften praktisch wie Zelle 1.

### Beispiel 2 (Analoganzeige)

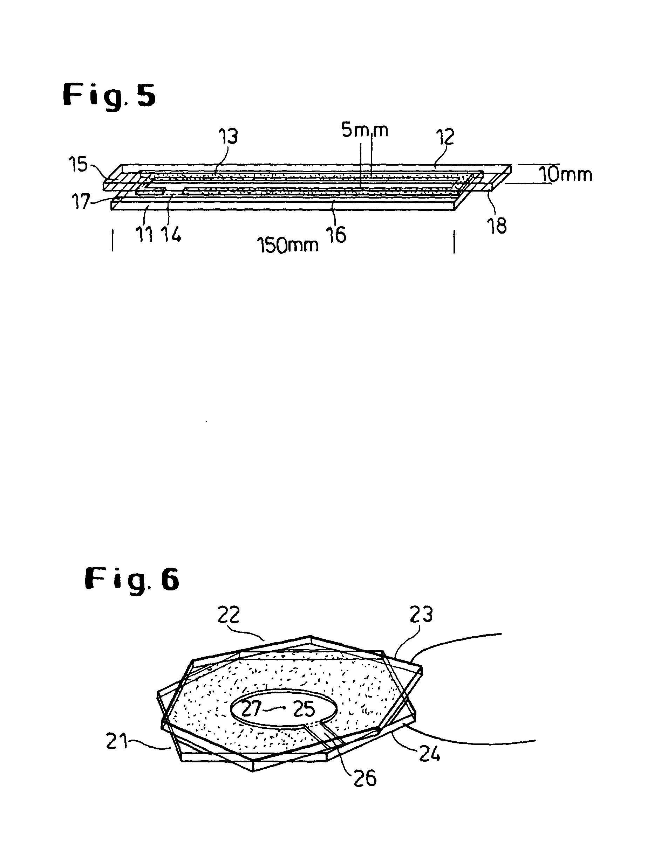

Auf eine mit ITO beschichtete Glasplatte (11) mit einem Flächenwiderstand von 15 Ω / □ (s. Fig. 5) wurde eine zweite Glasplatte (12) wie in Beispiel 1 beschrieben mit einer Klebstoffraupe (13) aufgeklebt, so dass sich ein Plattenabstand von 110 µm ergab und eine Einfüllöffnung (14) verblieb.

Wie in Beispiel 1 beschrieben wurde die Zelle mit einer Lösung, die 0,05 molar an der elektrochromen Verbindung der Formel 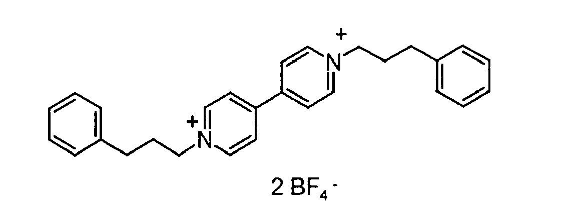 sowie 0,05 molar an Ferrocen der Formel 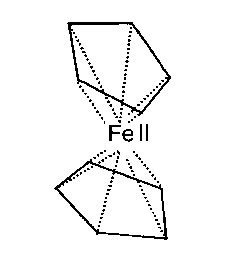 und 0,0175 molar an Ferroceniumtetrafluoroborat der Formel 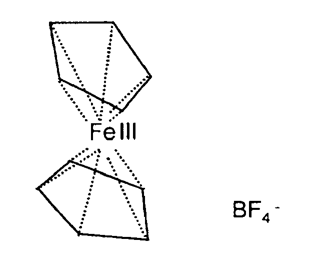 war, befüllt und verschlossen.

An die kurzen Kanten der Platte (12) wurde jeweils ein Kabel (15) und (18) mittels Leitsilber angelötet. Bei der Platte (11) wurde die lange Kante komplett mit Leitsilber (16) bestrichen und ebenfalls ein Kabel (17) angelötet.

Die derart hergestellte Zelle wird im Folgenden als **Zelle 3** bezeichnet.

Außerdem wurde eine zweite Zelle (= **Zelle 4**) auf dieselbe Weise wie soeben beschrieben hergestellt mit dem einzigen Unterschied, dass die elektrochrome Flüssigkeit kein Ferroceniumtetrafluoroborat enthielt.

Zelle 3 wurde mit den beiden Kabeln (15) und (17) an eine geregelte Spannung angelegt, während Kabel (18) mit Kabel (17) direkt verbunden war. Dabei färbte sich der dem Kabel (15) zugewandte Teil der Zelle blau, der andere Teil dagegen blieb farblos. Durch Veränderung der Spannung im Bereich 0,7 - 3 V konnte die Übergangszone blau - farblos entlang der Zelle verschoben werden und diente somit als Anzeige der angelegten Spannung.

Ganz analog ließ sich die Zelle 4 betreiben.

Beide Zellen unterschieden sich jedoch charakteristisch in der Breite der Übergangszone blau - farblos. Diese wurde ermittelt durch Vermessen der Transmission bei 605 nm über die gesamte Länge der Zelle. Der Bereich zwischen 10 und 90 % der maximalen Transmissionsänderung wurde als Übergangszone festgelegt. Bei Zelle 3 ergab sich eine Breite von 11 mm, bei Zelle 4 eine von 19 mm. Somit ist Zelle 3 mit der erfindungsgemäßen elektrochromen Lösung überlegen, da eine schmalere Übergangszone eine höhere Anzeige- und Ablesegenauigkeit der angelegten Spannung ermöglicht.

Wurden Kabel (17) und (18) nicht direkt miteinander verbunden, sondern über einen regelbaren Widerstand (0 - 500 Ω), so konnte der Bereich der Zelle, in dem durch Variation der angelegten Spannung die Übergangszone verschoben werden konnte, vergrößert werden.

### Beispiel 3 (Blende)

Zwei sechseckige mit ITO beschichtete Glasplatten (21) und (22) (Flächenwiderstand 6,8 Ω/□) wurden auf der unbeschichteten Seite mit einem Ring (23) bzw. (24) aus Leitsilber versehen. An den Ecken wurde dieser Ring mit der ITO-Schicht durch Leitsilber elektrisch leitend verbunden. Auf Platte (21) wurde auf die ITO-beschichtete Seite wie in Beispiel 1 beschrieben Klebstoff und Abstandshalter so aufgetragen wurde, dass im Zentrum eine runde Fläche (25) sowie eine Einfüllöffnung (26) frei blieb. Im Zentrum der runden Fläche (25) wurde ein Goldkügelchen (27) mit einem Durchmesser von 130 µm gelegt. Die Platte (22) wurde mit ihrer ITO-beschichteten Seite aufgelegt, angedrückt, und der Klebstoff wurde wie in Beispiel 1 beschrieben ausgehärtet. Man erhielt so eine Zelle wie in Fig. 6 gezeigt mit einem Schichtabstand von 110 µm.

Diese Zelle wurde wie in Beispiel 2 beschrieben mit der Lösung des Beispiels 2 gefüllt und verschlossen. Schließlich wurden an die beiden Ringe (23) und (24) Kabel mit Leitsilber angelötet.

Die derart hergestellte Zelle wird im Folgenden als **Zelle 5** bezeichnet.

Außerdem wurde eine zweite Zelle (= **Zelle 6**) auf dieselbe Weise wie soeben beschrieben hergestellt mit dem einzigen Unterschied, dass die elektrochrome Flüssigkeit kein Ferroceniumtetrafluoroborat enthielt.

Durch Anlegen einer regelbaren Spannung von 0,5 - 1,4 V an die beiden Kabel färbten sich die Zelle 5 und 6 ringförmig blau, wobei das Zentrum farblos blieb. Mit zunehmender Spannung ließ sich die Größe des farblosen Zentrums verkleinern.

Beide Zellen unterschieden sich jedoch charakteristisch in der Breite der Übergangszone blau - farblos. Diese wurde ermittelt durch Vermessen der Transmission bei 605 nm über den Radius der runden Fläche (25) der Zelle. Der Bereich zwischen 10 und 90 % der maximalen Transmissionsänderung wurde als Übergangszone festgelegt. Bei Zelle 5 ergab sich eine Breite von 0,7 mm, bei Zelle 6 eine von 1,3 mm. Somit ist Zelle 5 mit der erfindungsgemäßen elektrochromen Lösung überlegen, da eine schmalere Übergangszone eine größere Tiefenschärfe der Abbildung in einer Kamera ermöglicht.

## Patentansprüche

1. Elektrochrome Vorrichtung, enthaltend ein Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt ist und die leitfähigen Beschichtungen an mindestens einer Stelle mit einem elektrischen Leiter verbunden sein können, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, das mindestens eine reduzierbare elektrochrome Verbindung OX₂ und mindestens eine oxidierbare elektrochrome Verbindung RED₁ enthält, **dadurch gekennzeichnet, daß** das elektrochrome Medium noch eine weitere reduzierbare oder oxidierbare elektrochrome Verbindung OX₃ bzw. RED₃ in einer Konzentration von 20 % bis 30 % der Konzentration von OX₂ oder RED₁ enthält, deren Reduktions- bzw. Oxidationspotential vom Betrag her nicht größer ist als das Reduktionspotential von OX₂ bzw. das Oxidationspotential von RED₁.

2. Elektrochrome Vorrichtung gemäß Anspruch 1, **dadurch gekennzeichnet, daß** als OX₃ das zu RED₁ korrespondierende OX₁ eingesetzt wird.

3. Elektrochrome Vorrichtung gemäß Anspruch 1, **dadurch gekennzeichnet, daß** als RED₃ das zu OX₂ korrespondierende RED₂ eingesetzt wird.

4. Elektrochrome Vorrichtung gemäß einem oder mehrerer der Ansprüche 1 bis 3, **dadurch gekennzeichnet, daß** OX₃ bzw. RED₃ im sichtbaren Teil des elektromagnetischen Spektrums möglichst nicht oder nur schwach absorbieren.

5. Elektrochrome Vorrichtung gemäß einem oder mehrerer der Ansprüche 1 bis 4, **dadurch gekennzeichnet, daß** es sich bei der Vorrichtung um eine Anzeigevorrichtung handelt.

6. Elektrochrome Vorrichtung gemäß einem oder mehrerer der Ansprüche 1 bis 4, **dadurch gekennzeichnet, daß** es sich bei der Vorrichtung um eine Analoganzeige handelt.

7. Elektrochrome Vorrichtung gemäß einem oder mehrerer der Ansprüche 1 bis 4, **dadurch gekennzeichnet, daß** es sich bei der Vorrichtung um eine veränderliche Blende handelt.

8. Elektrochrome Vorrichtung gemäß einem oder mehrerer der Ansprüche 1 bis 4, **dadurch gekennzeichnet, daß** es sich bei der Vorrichtung um einen Berührungssensor handelt.

## Claims

1. Electrochromic device comprising a pair of glass or plastic plates or plastic films of which at least one plate or film, preferably both plates or films, are provided on in each case one side with an electrically conductive coating, of which at least one plate or film and its conductive coating is transparent, of which the other may be mirrored, and of which in the case of at least one of the two plates or films the electrically conductive layer is divided into separate, individually contacted area segments and the conductive coatings can be connected at at least one point to an electrical conductor, where the plates or films are joined together via a sealing ring on the sides of their conductive coating, and the volume formed by the two plates or films and the sealing ring is filled with an electrochromic medium which comprises at least one reducible electrochromic compound OX₂ and at least one oxidizable electrochromic compound RED₁, **characterized in that** the electrochromic medium also comprises a further reducible or oxidizable electrochromic compound OX₃ or RED₃ respectively in a concentration of 20% to 30% of the concentration of OX2 or RED₁ whose reduction or oxidation potential respectively has a value which is not greater than the reduction potential of OX₂ or the oxidation potential of RED₁.

2. Electrochromic device according to Claim 1, **characterized in that** the OX₃ employed is the OX₁ corresponding to RED₁.

3. Electrochromic device according to Claim 1, **characterized in that** the RED₃ employed is the RED₂ corresponding to OX₂..

4. Electrochromic device according to one or more of Claims 1 to 3, **characterized in that** OX₃ and RED₃ only absorb weakly, or if possible not at all, in the visible part of the electromagnetic spectrum.

5. Electrochromic device according to one or more of Claims 1 to 4, **characterized in that** the device is a display device.

6. Electrochromic device according to one or more of Claims 1 to 4, **characterized in that** the device is an analogue display device.

7. Electrochromic device according to one or more of Claims 1 to 4, **characterized in that** the device is an adjustable diaphragm.

8. Electrochromic device according to one or more of Claims 1 to 4, **characterized in that** the device is a contact sensor.

## Revendications

1. Dispositif électrochrome contenant une paire de plaques en verre ou en matière plastique ou de feuilles en matière plastique, dont au moins une plaque ou feuille, avantageusement les deux plaques ou feuilles, sont pourvues, d'un côté chacune, d'un revêtement électroconducteur, dont au moins une plaque ou feuille et son revêtement conducteur sont transparents, dont l'autre peut être rendue réfléchissante et dont la couche électroconductrice d'au moins l'une des deux plaques ou feuilles est divisée en segments bidimensionnels séparés, connectés individuellement, et les revêtements conducteurs peuvent être reliés en au moins un point à un conducteur électrique, les plaques ou feuilles étant assemblées au moyen d'une bague d'étanchéité sur les côtés de leur revêtement conducteur et le volume défini par les deux plaques ou feuilles et la bague d'étanchéité est rempli d'un milieu électrochrome qui contient un composé éélectrochrome OX₂ réductible et au moins un composé électrochrome RED₁ oxydable, **caractérisé en ce que** le milieu électrochrome contient encore un autre composé électrochrome réductible ou oxydable OX₃ ou respectivement RED₃ à une concentration de 20 % à 30 % de la concentration de OX₂ ou RED₁, dont la valeur du potentiel de réduction ou respectivement d'oxydation n'est pas plus grande que celle du potentiel de réduction de OX₂ ou respectivement celle du potentiel d'oxydation de RED₁.

2. Dispositif électrochrome suivant la revendication 1, **caractérisé en ce que** le composé OX₁ correspondant à RED₁ est utilisé en tant que OX₃.

3. Dispositif électrochrome suivant la revendication 1, **caractérisé en ce que** le composé RED₂ correspondant à OX₂ est utilisé en tant que RED₃.

4. Dispositif électrochrome suivant l'une ou plusieurs des revendications 1 à 3, **caractérisé en ce que** OX₃ ou RED₃ n'absorbent autant que possible nullement ou n'absorbent que faiblement dans la partie visible du spectre électromagnétique.

5. Dispositif électrochrome suivant l'une ou plusieurs des revendications 1 à 4, **caractérisé en ce que** le dispositif est un dispositif d'affichage.

6. Dispositif électrochrome suivant l'une ou plusieurs des revendications 1 à 4, **caractérisé en ce que** le dispositif est un affichage analogique.

7. Dispositif électrochrome suivant l'une ou plusieurs des revendications 1 à 4, **caractérisé en ce que** le dispositif est un diaphragme variable.

8. Dispositif électrochrome suivant l'une ou plusieurs des revendications 1 à 4, **caractérisé en ce que** le dispositif est un capteur de contact.
